# EUROPEAN PATENT APPLICATION

(11) **EP 4 659 569 A2**
(43) Date of publication of application: **10.12.2025**
(21) Application number: 25211340.2
(22) Date of filing: 22.05.2020
(51) Int. Cl.: A01G 22/30

(54) **NUTRIENT COMPOSITIONS FOR CULTIVATING SPHAGNUM**

(30) Priority: 22.05.2019 GB 201907228; 22.05.2019 GB 201907229
(62) Divisional of application: 20734797.2
(71) Applicant: Micropropagation Services (E.M.) Limited, Loughborough, Leicestershire LE12 6NZ (GB)
(72) Inventor: WRIGHT, Neal, Loughborough, Leicestershire, LE12 6PE (GB)
(74) Representative: Mathys & Squire

(57) **Abstract**

The invention provides a method for cultivating Sphagnum. The method comprises supplying the Sphagnum with a nutrient composition. The nutrient composition comprises nitrogen, phosphorus, and/or potassium.

## Description

The present invention relates to *Sphagnum* and cultivation of the same.

*Sphagnum* is a genus of moss. It is a lower plant, or a non-vascular plant, and is an example of a bryophyte. It is often referred to as peat moss and typically grows in the wild in peatlands or wetlands. Examples of suitable habitats for *Sphagnum* include bogs, such as raised bogs and blanket bogs, moors, mires, and fens. *Sphagnum* has a particularly high capacity for maintaining water in its hyaline cells. As such, in its natural environment, *Sphagnum* typically grows in wet conditions.

Peatlands around the world are formed when lower layers of *Sphagnum* decay to form peat, while the upper layer continues to grow on the surface. As a result of this, carbon is stored within the peat while the actively-growing upper *Sphagnum* continues sequestering carbon dioxide from the atmosphere. Peatlands cover approximately 3% of the land on the Earth's surface, but store over 500 Gigatonnes of carbon - more than all other vegetation types combined. However, due to adverse impacts on the peatlands (e.g. industrial pollution, drainage - particularly for agriculture, and peat harvesting) the actively-growing upper *Sphagnum* has been eroded (or is now absent) in many peatlands, thereby exposing the peat to the atmosphere. This absence of surface *Sphagnum* enables carbon to be released from the peatland. This is a pressing environmental issue, and damaged peatlands now contribute around 6% of global anthropogenic carbon dioxide emissions. As a result, there is a pressing need for effective peatland restoration and methods of sustainably growing *Sphagnum* for restoration purposes. Current methods of peatland restoration typically involve translocating *Sphagnum* from other sites including peatlands, which is clearly not sustainable. Moreover, peat is also used as horticultural growing media. As this peat is harvested from the wild this damages peatlands and ultimately exacerbates carbon emissions.

Paludiculture techniques have typically been used to grow *Sphagnum* and are believed to be essential to achieve optimal growth. Such techniques involve reproducing growth conditions in the wild by growing in a peat bog or bog grassland and irrigating to raise and maintain a high water table at the site. Typically, this is achieved by forming banks and using blocking ditches, and then filling the ditches with water and optionally additionally using underground pipes to irrigate and saturate the soil to raise the water table. Typically, the water table may be raised up to a position around 5-15 cm below the surface of the field.

Conventional methods of *Sphagnum* farming have numerous disadvantages, including the use of significant amounts of water to raise the water table. The water applied to the area by way of the underground pipes is in excess and not used by the *Sphagnum* for growth. Thus, the conventional methods waste water. The excess water used may cause damage to surrounding areas/problems with adjoining areas, including crop flooding; this is especially the case where adjacent areas are desired to be kept drained. The use of ditches filled with water also leads to significant evaporation and associated methane release, which can be damaging to the environment.

Moreover, the conventional methods are also expensive and complex to implement, typically requiring the construction of ditches, banks, and underground piping. Typically, around 30-50 cm of a top layer (e.g. soil) of the surface of the site is removed to remove layers that have been agriculturally cultivated. Additionally, sites must also be levelled precisely. This process reduces the suitability of many sites. To form the necessary banks and ditches to raise the water table, approximately 50% of the site area is required. This reduces the available area for a productive crop of *Sphagnum* to approximately 50%. The cost involved to prepare such a site is also large, costing over £10,000 per hectare. Furthermore, there are access complications associated with water-logged sites. For example, it is difficult to apply *Sphagnum* to such soft ground, and is often applied by hand as machinery cannot easily be used. Furthermore, harvesting can only be achieved using the banks for access. This may be performed by specialist equipment such as using an excavator with a particularly long reach. Erosion of the banks may further complicate this issue. Additionally, harvesting such a crop as *Sphagnum* with high water content creates a very heavy product which is difficult to transport.

The habitats where *Sphagnum* mosses are found in nature (e.g. peat bogs) are typically associated with low nutrient concentrations. Therefore, methods of cultivating *Sphagnum* have conventionally focussed on growth under low nutrient conditions and it has become established theory in the art that *Sphagnum* will only tolerate very low levels of nutrients.

The present invention overcomes one or more of the above-mentioned problems.

The present inventors have developed a method for cultivating *Sphagnum* that includes the use of a nutrient composition. Surprisingly, the inventors have found that *Sphagnum* is tolerant to a range of different nutrients and indeed exhibits improved growth under said nutrient conditions.

According to an aspect of the invention, there is provided a method for cultivating *Sphagnum,* the method comprising supplying the *Sphagnum* with a nutrient composition, the nutrient composition comprising nitrogen, phosphorus, and/or potassium.

In one aspect the invention provides a method for cultivating *Sphagnum,* the method comprising supplying the *Sphagnum* with a nutrient composition, the nutrient composition comprising one or more nutrients selected from the group consisting of: phosphorus, potassium, nitrogen, magnesium, calcium, iron, sulphate, nitrate, ammonium, sodium, manganese, copper, zinc, sulphur, boron, molybdenum, chloride, and nitrite.

As used herein, the nutrient composition comprises one or more nutrients. For example, the nutrient composition may comprise a plurality of chemicals such as nitrogen, phosphorous, and potassium. In some embodiments, only a single nutrient may be present. In one embodiment, the nutrient composition may be in the form of an aqueous solution in which the nutrients are dissolved. In other words, the nutrient(s) may be dissolved in water. Optionally, the nutrients may be in the form of nutritional salts. In another embodiment, the nutrient composition may be in the form of non-dissolved nutrients (e.g. powders), which may later be diluted with water (e.g. via irrigation).

The nutrient composition may be supplied by irrigation. Disclosed herein is a method for cultivating *Sphagnum,* the method comprising supplying the *Sphagnum* with a nutrient composition, the nutrient composition comprising nitrogen, phosphorus, and/or potassium. Disclosed herein is a method for cultivating *Sphagnum,* the method comprising irrigating the *Sphagnum* with a nutrient composition, the nutrient composition comprising one or more nutrients selected from the group consisting of: phosphorus, potassium, nitrogen, magnesium, calcium, iron, sulphate, nitrate, ammonium, sodium, manganese, copper, zinc, sulphur, boron, molybdenum, chloride, and nitrite.

In one embodiment, the nutrient composition comprises nitrogen. For example, the nitrogen may be provided in the form of nitrite, nitrate, ammonium. Preferably, the nutrient composition does not comprise urea.

In one embodiment, the nutrient composition comprises phosphorous. Optionally, the phosphorous is provided in the form of phosphate. In one embodiment, the nutrient composition comprises nitrogen and phosphorous.

In one embodiment, the nutrient composition comprises potassium. In one embodiment, the nutrient composition comprises nitrogen and potassium. In one embodiment, the nutrient composition comprises phosphorous and potassium. Preferably, the nutrient composition comprises nitrogen, phosphorous, and potassium.

Optionally, the nutrient composition is provided as a solution. For example, the solution may be an aqueous solution of water in which the nutrient composition is dissolved. The solution may be applied to the *Sphagnum,* such as by irrigation.

Optionally, the nutrient composition comprises at least 18.63 mg of nitrogen per litre (L) of water. For example, the total nitrogen may be made up from nitrite, nitrate, and/or ammonium. Optionally, the nutrient composition comprises less than 240.81 mg of nitrogen per L. In one embodiment, the nutrient composition comprises between 18.63 mg and 240.81 mg of nitrogen per L. Optionally, the nutrient composition comprises less than 106.69 mg of nitrogen per L. In one embodiment, the nutrient composition comprises between 18.63 mg and 106.69 mg of nitrogen per L. Optionally, the nutrient composition comprises at least 25 mg of nitrogen per L. In one embodiment, the nutrient composition comprises between 25 mg and 75 mg of nitrogen per L. Optionally, the nutrient composition comprises at least 50 mg of nitrogen per L. Optionally, the nutrient composition comprises at least 75 mg of nitrogen per L. Optionally, the nutrient composition comprises at least 164 mg of nitrogen per L.

Optionally, the nutrient composition comprises at least 10.99 mg of phosphorous per L. Optionally, the nutrient composition comprises less than 61.41 mg of phosphorous per L. In one embodiment, the nutrient composition comprises between 10.99 mg and 61.41 mg of phosphorous per L. Optionally, the nutrient composition comprises less than 54.02 mg of phosphorous per L. In one embodiment, the nutrient composition comprises between 10.99 mg and 54.02 mg of phosphorous per L. Optionally, the nutrient composition comprises at least 15 mg of phosphorous per L. Optionally, the nutrient composition comprises at least 20 mg of phosphorous per L. Optionally, the nutrient composition comprises at least 57 mg of phosphorous per L.

Optionally, the nutrient composition comprises at least 66.84 mg of potassium per L. Optionally, the nutrient composition comprises less than 266.25 mg of potassium per L. In one embodiment, the nutrient composition comprises between 66.84 mg and 266.25 mg of potassium per L. Optionally, the nutrient composition comprises less than 151.10 mg of potassium per L. In one embodiment, the nutrient composition comprises between 66.84 mg and 151.10 mg of potassium per L. Optionally, the nutrient composition comprises between 75 and 125 mg of potassium per L. Optionally, the nutrient composition comprises at least 203 mg of potassium per L.

In one embodiment, the nutrient composition comprises:
a) at least 18.63 mg of nitrogen per L;
b) at least 10.99 mg of phosphorous per L; and/or
c) at least 66.84 mg of potassium per L.

In one embodiment, the nutrient composition comprises:
a) between 18.63 mg and 240.81 mg of nitrogen per L;
b) between 10.99 mg and 61.41 mg of phosphorous per L; and/or
c) between 66.84 mg and 266.25 mg of potassium per L.

In one embodiment, the nutrient composition comprises:
a) between 18.63 mg and 106.69 mg of nitrogen per L;
b) between 10.99 mg and 54.02 mg of phosphorous per L; and/or
c) between 66.84 mg and 151.10 mg of potassium per L.

In one embodiment, the nutrient composition comprises:
a) at least 50 mg of nitrogen per L;
b) at least 15 mg of phosphorous per L; and/or
c) at least 75 mg of potassium per L.

In one embodiment, the nutrient composition comprises:
a) at least 175 mg of nitrogen per L;
b) at least 60 mg of phosphorous per L; and/or
c) at least 210 mg of potassium per L.

In one embodiment, the nutrient composition comprises:
a) between 80 mg and 100 mg of nitrogen per L;
b) between 20 mg and 30 mg of phosphorous per L; and/or
c) between 90 mg and 120 mg of potassium per L.

It has been found that growth of *Sphagnum* is particularly influenced by nitrogen, phosphorous, and potassium. The inventors have found that using particular amounts of nitrogen, phosphorus, and/or potassium results in surprisingly improved growth. In one embodiment, the nutrient composition comprises nitrogen and phosphorous. In one embodiment, the nutrient composition comprises nitrogen and potassium. In one embodiment, the nutrient composition comprises phosphorous and potassium. In a preferred embodiment, the nutrient composition comprises nitrogen, phosphorous and potassium.

In some embodiments, the nutrient composition comprises calcium. Optionally, the nutrient composition comprises at least 1.17 mg of calcium per L. Optionally, the nutrient composition comprises less than 92.39 mg of calcium per L. In one embodiment, the nutrient composition comprises between 1.17 mg and 92.39 mg of calcium per L. Optionally, the nutrient composition comprises less than 36.96 mg of calcium per L. In one embodiment, the nutrient composition comprises between 1.17 mg and 36.96 mg of calcium per L. Optionally, the nutrient composition comprises less than 83 mg of calcium per L. In one embodiment, the nutrient composition comprises between 1.17 mg and 83 mg of calcium per L. Optionally, the nutrient composition comprises less than 80 mg of calcium per L. In one embodiment, the nutrient composition comprises between 1.17 mg and 80 mg of calcium per L. Optionally, the nutrient composition comprises less than 50 mg of calcium per L. In one embodiment, the nutrient composition comprises between 1.17 mg and 50 mg of calcium per L. Optionally, the nutrient composition comprises at least 10 mg of calcium per L. In one embodiment, the nutrient composition comprises between 10 mg and 50 mg of calcium per L. Although even small quantities of calcium have been found to be beneficial to growth of *Sphagnum,* sometimes calcium can be found in soils, which means that in some cases little or no calcium can be applied via irrigation.

In one embodiment, the nutrient composition comprises:
a) at least 18.63 mg of nitrogen per L;
b) at least 10.99 mg of phosphorous per L;
c) at least 66.84 mg of potassium per L; and
d) less than 80 mg of calcium per L.

In some embodiments, the nutrient composition comprises magnesium. Optionally, the nutrient composition comprises at least 0.33 mg of magnesium per L. Optionally, the nutrient composition comprises less than 32.93 mg of magnesium per L. In one embodiment, the nutrient composition comprises between 0.33 mg and 32.93 mg of magnesium per L. Optionally, the nutrient composition comprises less than 13.17 mg of magnesium per L. In one embodiment, the nutrient composition comprises between 0.33 mg and 13.17 mg of magnesium per L. Optionally, the nutrient composition comprises at least 5.75 mg of magnesium per L. In one embodiment, the nutrient composition comprises between 5.75 mg and 32.93 mg of magnesium per L. Optionally, the nutrient composition comprises at least 26 mg of magnesium per L. Similarly, sometimes magnesium can be found in soils, which means that in some cases little or no magnesium can be applied via irrigation.

In some embodiments, the nutrient composition comprises nitrite. The nitrite may contribute, at least in part, to the total nitrogen content of the nutrient composition. In other words, the nitrogen content of the nutrient composition may be made up of at least nitrite. Optionally, the nutrient composition comprises at least 0.01 mg of nitrite per L. Optionally, the nutrient composition comprises less than 1.56 mg of nitrite per L. In one embodiment, the nutrient composition comprises between 0.01 mg and 1.56 mg of nitrite per L. Optionally, the nutrient composition comprises at least 0.70 mg of nitrite per L. In one embodiment, the nutrient composition comprises between 0.70 mg and 1.56 mg of nitrite per L.

In some embodiments, the nutrient composition comprises nitrate. The nitrate may contribute, at least in part, to the total nitrogen content of the nutrient composition. In other words, the nitrogen content of the nutrient composition may be made up of at least nitrate. Optionally, the nutrient composition comprises at least 82.52 mg of nitrate per L. Optionally, the nutrient composition comprises less than 378.62 mg of nitrate per L. In one embodiment, the nutrient composition comprises between 82.52 mg and 378.62 mg of nitrate per L.

In some embodiments, the nutrient composition comprises ammonium (NH₄). The ammonium may contribute, at least in part, to the total nitrogen content of the nutrient composition. In other words, the nitrogen content of the nutrient composition may be made up of at least ammonium. For example, the nitrogen may comprise nitrite, nitrate, ammonium. Optionally, the nutrient composition comprises at least 0.01 mg of ammonium per L. Optionally, the nutrient composition comprises less than 26.64 mg of ammonium per L. In one embodiment, the nutrient composition comprises between 0.01 mg and 26.64 mg of ammonium per L. Optionally, the nutrient composition comprises at least 12.02 mg of ammonium per L. In one embodiment, the nutrient composition comprises between 12.02 mg and 26.64 mg of ammonium per L.

In some embodiments, the nutrient composition comprises sodium. Optionally, the nutrient composition comprises at least 2.51 mg of sodium per L. Optionally, the nutrient composition comprises less than 53.47 mg of sodium per L. In one embodiment, the nutrient composition comprises between 2.51 mg and 53.47 mg of sodium per L. Optionally, the nutrient composition comprises at least 2.92 mg of sodium per L. In one embodiment, the nutrient composition comprises between 2.92 mg and 53.47 mg of sodium per L. Optionally, the nutrient composition comprises less than 7.30 mg of sodium per L. In one embodiment, the nutrient composition comprises between 2.51 mg and 7.30 mg of sodium per L.

In some embodiments, the nutrient composition comprises manganese. Optionally, the nutrient composition comprises at least 0.21 mg of manganese per L. Optionally, the nutrient composition comprises less than 1.94 mg of manganese per L. In one embodiment, the nutrient composition comprises between 0.21 mg and 1.94 mg of manganese per L. Optionally, the nutrient composition comprises at least 0.41 mg of manganese per L. In one embodiment, the nutrient composition comprises between 0.41 mg and 1.94 mg of manganese per L. Optionally, the nutrient composition comprises less than 1.02 mg of manganese per L. In one embodiment, the nutrient composition comprises between 0.21 mg and 1.02 mg of manganese per L.

In some embodiments, the nutrient composition comprises copper. Optionally, the nutrient composition comprises at least 0.09 mg of copper per L. Optionally, the nutrient composition comprises less than 0.25 mg of copper per L. In one embodiment, the nutrient composition comprises between 0.09 mg and 0.25 mg of copper per L. Optionally, the nutrient composition comprises less than 0.21 mg of copper per L. In one embodiment, the nutrient composition comprises between 0.09 mg and 0.21 mg of copper per L.

In some embodiments, the nutrient composition comprises zinc. Optionally, the nutrient composition comprises at least 0.37 mg of zinc per L. Optionally, the nutrient composition comprises less than 1.56 mg of zinc per L. In one embodiment, the nutrient composition comprises between 0.37 mg and 1.56 mg of zinc per L. Optionally, the nutrient composition comprises at least 0.55 mg of zinc per L. In one embodiment, the nutrient composition comprises between 0.55 mg and 1.56 mg of zinc per L. Optionally, the nutrient composition comprises less than 1.38 mg of zinc per L. In one embodiment, the nutrient composition comprises between 0.37 mg and 1.38 mg of zinc per L.

In some embodiments, the nutrient composition comprises sulfur. Optionally, the nutrient composition comprises at least 4.30 mg of sulfur per L. Optionally, the nutrient composition comprises less than 65.59 mg of sulfur per L. In one embodiment, the nutrient composition comprises between 4.30 mg and 65.59 mg of sulfur per L. Optionally, the nutrient composition comprises less than 65.59 mg of sulfur per L. In one embodiment, the nutrient composition comprises between 4.30 mg and 10.76 mg of sulfur per L.

In some embodiments, the nutrient composition comprises boron. Optionally, the nutrient composition comprises at least 0.14 mg of boron per L. Optionally, the nutrient composition comprises less than 1.02 mg of boron per L. In one embodiment, the nutrient composition comprises between 0.14 mg and 1.02 mg of boron per L. Optionally, the nutrient composition comprises at least 0.19 mg of boron per L. In one embodiment, the nutrient composition comprises between 0.19 mg and 1.02 mg of boron per L. Optionally, the nutrient composition comprises less than 0.49 mg of boron per L. In one embodiment, the nutrient composition comprises between 0.14 mg and 0.49 mg of boron per L.

In some embodiments, the nutrient composition comprises iron. Optionally, the nutrient composition comprises at least 0.31 mg of iron per L. Optionally, the nutrient composition comprises less than 9.15 mg of iron per L. In one embodiment, the nutrient composition comprises between 0.31 mg and 9.15 mg of iron per L. Optionally, the nutrient composition comprises at least 0.98 mg of iron per L. In one embodiment, the nutrient composition comprises between 0.98 mg and 9.15 mg of iron per L. Optionally, the nutrient composition comprises less than 2.45 mg of iron per L. In one embodiment, the nutrient composition comprises between 0.31 mg and 2.45 mg of iron per L. In one embodiment, the nutrient composition comprises at least 5 mg of iron per L.

In some embodiments, the nutrient composition comprises molybdenum. Optionally, the nutrient composition comprises at least 0.01 mg of molybdenum per L. Optionally, the nutrient composition comprises less than 0.15 mg of molybdenum per L. In one embodiment, the nutrient composition comprises between 0.01 mg and 0.15 mg of molybdenum per L. Optionally, the nutrient composition comprises at least 0.05 mg of molybdenum per L. In one embodiment, the nutrient composition comprises between 0.05 mg and 0.15 mg of molybdenum per L.

In some embodiments, the nutrient composition comprises chloride. In a preferred embodiment, the nutrient composition comprises at least 0.16 mg of chloride per L. Optionally, the nutrient composition comprises less than 97.64 mg of chloride per L. In one embodiment, the nutrient composition comprises between 0.16 mg and 97.64 mg of chloride per L. Optionally, the nutrient composition comprises less than 0.40 mg of chloride per L. In one embodiment, the nutrient composition comprises between 0.16 mg and 0.40 mg of chloride per L. Optionally, the nutrient composition comprises less than 58 mg of chloride per L. In one embodiment, the nutrient composition comprises between 0.16 mg and 58 mg of chloride per L.

In some embodiments, the nutrient composition comprises sulfate (SO₄). Optionally, the nutrient composition comprises at least 10.36 mg of sulfate per L. Optionally, the nutrient composition comprises less than 182.00 mg of sulfate per L. In one embodiment, the nutrient composition comprises between 10.36 mg and 182.00 mg of sulfate per L. Optionally, the nutrient composition comprises less than 47 mg of sulfate per L. In one embodiment, the nutrient composition comprises between 10.36 mg and 47 mg of sulfate per L. Optionally, the nutrient composition comprises at least 98 mg of sulfate per L. In one embodiment, the nutrient composition comprises between 98 mg and 182 mg of sulfate per L.

In one embodiment, the nutrient composition comprises:
a) between 90 mg and 110 mg of nitrogen per L;
b) between 20 mg and 30 mg of phosphorous per L;
c) between 90 mg and 120 mg of potassium per L;
d) between 20 mg and 40 mg of calcium per L;
e) between 10 mg and 15 mg of magnesium per L;
f) between 2.51 mg and 5 mg of sodium per L
g) between 0.25 mg and 0.5 mg of manganese per L;
h) between 0.1 mg and 0.15 mg of copper per L;
i) between 0.4 mg and 0.75 mg of zinc per L;
j) between 5 mg and 20 mg of sulfur per L;
k) between 0.1 mg and 0.3 mg of boron per L;
l) between 0.5 mg and 1.2 mg of iron per L;
m) between 0.25 mg and 0.75 mg of molybdenum per L; and/or
n) between 0.1 mg and 0.2 mg of chloride per L.

In one embodiment, the nutrient composition comprises one or more nutrients dissolved in water. For example, the nutrient composition comprises nitrogen, phosphorous, and/or potassium dissolved in water. Optionally, the water does not contain anything else other than the nutrients. In one embodiment, the water does not contain plant growth hormones. In one embodiment, the nutrient composition consists of water and nutrients. For example, the nutrient composition may consist of water and nitrogen, phosphorous, and/or potassium. In one embodiment, the nutrient composition consists of water and nitrogen, phosphorous, potassium, calcium, magnesium, sodium, manganese, copper, zinc, sulfur, boron, iron, molybdenum, and/or chloride.

Preferably, the nutrient composition is supplied by irrigation. For example, the water in the irrigation may comprise the nutrient composition. More preferably, the nutrient composition is supplied be controllable irrigation. For example, a spray irrigation system may be used to controllably irrigate the *Sphagnum* with the nutrient composition. The *Sphagnum* may optionally further be supplemented with further irrigation comprising water without nutrients.

It will be appreciated by those skilled in the art that the values of nutrients in mg per L disclosed herein can readily be converted into an application rate in mg per L of nutrient irrigation by multiplying the values in mg per L by the amount of nutrient irrigation applied (e.g. 12 L of nutrient per week). The value may also be adjusted if further irrigation which does not comprise nutrients is applied. In one example, 14 L of water (without nutrients) may be applied per week in addition to 12 L of nutrient stock solution. The mg per L values can then be multiplied by 12 and divided by 26 (12 + 14 = 26).

Preferably, the method comprises supplying between 5 and 15 L of nutrient composition per m² per week. For example, the nutrient composition may be supplied as irrigation. More preferably, the method comprises supplying at least 10 L of nutrient composition per m² per week. Even more preferably, the method comprises supplying between 10 and 12 L of nutrient composition per m² per week. This represents a total amount per week, and the amount of nutrients may be applied at different times. Optionally, the method comprises supplying between 3 and 4 L of nutrient composition per m², which is applied between 3 and 4 times per week (i.e. between 9 and 16 L per week). In one embodiment, the method comprises supplying 4 L of nutrient composition per m², which is applied 3 times per week. This provides a total supply of 12 L of nutrient composition per week. In one embodiment, the method comprises supplying 3.75 L of nutrient composition per m², which is applied 3 times per week. This provides a total supply of 11.25 L of nutrient composition per m² per week.

For example, this can be supplied by irrigation. If the irrigation is provided in batches (e.g. applied on different days), then some applications of irrigation may comprise nutrients while others comprise water without nutrients. The total amount of irrigation may depend on environmental factors. For example, if the *Sphagnum* is grown outside and out of controlled conditions, then during the summer the amount or frequency of irrigation may increase compared to winter.

The application rate of the nutrients determines how much nutrient is available to the *Sphagnum* over time, and the application rates described herein have been found to improve growth rates. For example, the method may comprise supplying at least a certain amount of nutrients per m² per week.

In some embodiments, the application rate (e.g. in mg per m² per week, or per day) encompasses supplying the indicated amount of nutrient in at least a single indicated time period. For example, in some embodiments, supplying 10 mg per m² per week encompasses supplying 10 mg per m² in a single week.

In some embodiments, the amount of nutrients applied per m² per week is an average amount. In other words, in some embodiments the nutrients do not need applying every week, so long as the average amount per m² per week indicated is supplied.

Preferably, an application rate referred to herein is a calculated average (e.g. per week or per day) over the growing season. In one embodiment an application rate may be a calculated average (e.g. per week or per day) over a period of up to 1, 2, 3, 4, 5, 6, 7, 8, 9, 10, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51 or 52 weeks (e.g. up to 1, 2, 3, 4, 5 or 6 weeks). Preferably, an application rate may be a calculated average (e.g. per week or per day) over a period of up to 1, 2, 3, 4, 5, 6, 7, 8 or 9 months (e.g. up to 1, 2, 3, 4, 5, or 6 months). For example, in a first week *Sphagnum* may be supplied with 3 mg/m² of a given nutrient and in a second week *Sphagnum* may be supplied with 5 mg/m² of a given nutrient. Thus, over the two weeks the average application rate may be considered to be 4 mg mg/m²/week.

Preferably, *Sphagnum* is supplied with nutrients in accordance with the invention at least once per week. As used herein, "at least once per week" preferably means at least once in a week (i.e. at least one time in a seven-day period).

Preferably, *Sphagnum* is supplied with nutrients at least twice or three times in a week. The invention encompasses methods where the *Sphagnum* is not supplied with nutrients in accordance with the invention weekly (e.g. on multiple consecutive weeks), even where an application rate is provided (e.g. in mg/m²/day or mg/m²/week). For example, the nutrients may be supplied every two weeks, or every three weeks in order to provide the average application rate. However, in a preferred embodiment *Sphagnum* is supplied with nutrients in accordance with the invention at least once weekly.

Most preferably, the nutrients are applied at least twice per week, even more preferably at least three times per week. In some embodiments, the nutrients may be applied every day, or every two days.

Where the *Sphagnum* is supplied with nutrients at a time interval indicated herein (e.g. per day, week, etc.), it is not intended that the *Sphagnum* is supplied with nutrients at that time interval indefinitely. Preferably, the time interval applies to supply of *Sphagnum* with nutrients during the growing season. Preferably, the *Sphagnum* is supplied with nutrients at an indicated time interval (e.g. per week, day, etc.) during the growing season (e.g. in spring, summer, and/or autumn). Thus, the application rates (e.g. amount of nutrients per m² per week) may refer to the amount applied in a week (preferably each week) during the growing season. In one embodiment nutrients may be supplied to the *Sphagnum* weekly for a period of up to 1, 2, 3, 4, 5, 6, 7, 8 or 9 months (e.g. in a particular year).

The skilled person will appreciate that the "growing season" can be determined based on the geographical location in which the method is being carried out. This will typically be the period of the year when crops and other plants grow successfully. In the northern hemisphere for outdoor growth this is typically April to October. However, when growing in e.g. a glasshouse the growing season may be all year round (e.g. when heated to at least 15 °C).

In one embodiment, the nutrient composition supplied in mg per m² per week is an average amount over a period of up to 1 month, preferably up to 3 months, more preferably up to 6 months. For example, over a period of cultivation of (e.g.) 1 month, the nutrient composition can be applied at an average amount per week.

In one embodiment, the nutrient composition supplied in mg per m² per day is an average amount over a period of up to 1 week, preferably up to 1 month, more preferably up to 3 months, even more preferably up to 6 months.

The amount of nutrients supplied in a week (or per week) may be a total figure where different amounts of nutrient can be provided at different times during the week, such that the amounts sum up to the total per week.

In some embodiments, the nutrient composition may be supplied by volume per m². For example, to provide 14 L per m² per week, 3.5 L may be applied four times per week, or equivalently 2 L may be applied every day (i.e. seven times per week).

In a preferred embodiment, the nutrient composition is supplied at a rate of 12 L per m² per week. As will be appreciated, the amount of nutrients disclosed above in mg per L can thus be multiplied by 12 to provide a value in mg per m² per week. Of course, more nutrient composition having a lower concentration of nutrients can be applied to achieve the same application rate.

In one embodiment, the method comprises supplying at least 209.64 mg of nitrogen per m² per week. In one embodiment, the method comprises supplying less than 1200.23 mg of nitrogen per m² per week. In one embodiment, the method comprises supplying less than 2889.72 mg of nitrogen per m² per week. In one embodiment, the method comprises supplying at least 223.61 mg of nitrogen per m² per week. In one embodiment, the method comprises supplying less than 1280.25 mg of nitrogen per m² per week. Preferably, the method comprises supplying at least 400 mg of nitrogen per m² per week, more preferably at least 600 mg per m² per week, even more preferably at least 800 mg per m² per week, still more preferably at least 1000 mg per m² per week. Most preferably, the method comprises supplying between 1000 and 1200 mg of nitrogen per m² per week. In one embodiment, the method comprises supplying between 200 mg and 800 mg of nitrogen per m² per week. In one embodiment, the method comprises supplying between 400 and 600 mg of nitrogen per m² per week.

In one embodiment, the method comprises supplying at least 123.68 mg of phosphorous per m² per week. In one embodiment, the method comprises supplying less than 607.67 mg of phosphorous per m² per week. In one embodiment, the method comprises supplying less than 736.92 mg of phosphorous per m² per week. In one embodiment, the method comprises supplying at least 131.93 mg of phosphorous per m² per week. In one embodiment, the method comprises supplying less than 648.18 mg of phosphorous per m² per week. Preferably, the method comprises supplying at least 150 mg of phosphorous per m² per week, more preferably at least 200 mg per m² per week, even more preferably at least 225 mg per m² per week, still more preferably at least 250 mg per m² per week. Most preferably, the method comprises supplying between 250 and 500 mg of phosphorous per m² per week.

In one embodiment, the method comprises supplying at least 751.96 mg of potassium per m² per week. In one embodiment, the method comprises supplying less than 1699.93 mg of potassium per m² per week. In one embodiment, the method comprises supplying less than 3195.00 mg of potassium per m² per week. In one embodiment, the method comprises supplying at least 802.09 mg of potassium per m² per week. In one embodiment, the method comprises supplying less than 1813.26 mg of potassium per m² per week. Preferably, the method comprises supplying at least 800 mg of potassium per m² per week, more preferably at least 900 mg per m² per week, even more preferably at least 1000 mg per m² per week, still more preferably at least 1100 mg per m² per week. Most preferably, the method comprises supplying between 1100 and 1500 mg of potassium per m² per week.

In one embodiment, the method comprises supplying:
a) at least 209.64 mg of nitrogen per m² per week;
b) at least 123.68 mg of phosphorous per m² per week; and/or
c) at least 751.96 mg of potassium per m² per week.

In one embodiment, the method comprises supplying:
a) between 209.64 mg and 1200.23 mg of nitrogen per m² per week;
b) between 123.68 mg and 607.67 mg of phosphorous per m² per week; and/or
c) between 751.96 mg and 1699.93 mg of potassium per m² per week.

In one embodiment, the method comprises supplying:
a) at least 223.61 mg of nitrogen per m² per week;
b) at least 131.93 mg of phosphorous per m² per week; and/or
c) at least 802.09 mg of potassium per m² per week.

In one embodiment, the method comprises supplying:
a) between 223.61 mg and 1280.25 mg of nitrogen per m² per week;
b) between 131.93 mg and 648.18 mg of phosphorous per m² per week; and/or
c) between 802.09 mg and 1813.26 mg of potassium per m² per week.

Preferably, the method comprises supplying:
a) at least 400 mg of nitrogen per m² per week;
b) at least 150 mg of phosphorous per m² per week; and/or
c) at least 800 mg of potassium per m² per week.

More preferably, the method comprises supplying:
a) at least 600 mg of nitrogen per m² per week;
b) at least 200 mg of phosphorous per m² per week; and/or
c) at least 900 mg of potassium per m² per week.

Even more preferably, the method comprises supplying:
a) at least 800 mg of nitrogen per m² per week;
b) at least 225 mg of phosphorous per m² per week; and/or
c) at least 1000 mg of potassium per m² per week.

Still more preferably, the method comprises supplying:
a) at least 1000 mg of nitrogen per m² per week;
b) at least 250 mg of phosphorous per m² per week; and/or
c) at least 1100 mg of potassium per m² per week.

Most preferably, the method comprises supplying:
a) between 1000 mg and 1200 mg of nitrogen per m² per week;
b) between 250 mg and 500 mg of phosphorous per m² per week; and/or
c) between 1100 mg and 1500 mg of potassium per m² per week.

In one embodiment, the method comprises supplying nutrient in a ratio of nitrogen to phosphorous of X:1, wherein X is at least 2. Preferably, the method comprises supplying nutrient in a ratio of nitrogen to phosphorous of X:1, wherein X is between 2 and 15. More preferably, the method comprises supplying nutrient in a ratio of nitrogen to phosphorous of X:1, wherein X is between 4 and 15. Even more preferably, the method comprises supplying nutrient in a ratio of nitrogen to phosphorous of X:1, wherein X is between 6 and 15.

In one embodiment, the method comprises supplying nutrient in a ratio of nitrogen to potassium of 1:Y, wherein Y is at least 1. In one embodiment, the method comprises supplying nutrient in a ratio of nitrogen to potassium of 1:Y, wherein Y is at least 1.5. Preferably, the method comprises supplying nutrient in a ratio of nitrogen to potassium of 1:Y, wherein Y is between 1 and 7.5. More preferably, the method comprises supplying nutrient in a ratio of nitrogen to potassium of 1:Y, wherein Y is between 1 and 5. Even more preferably, the method comprises supplying nutrient in a ratio of nitrogen to potassium of 1:Y, wherein Y is between 1 and 2.5. Still more preferably, the method comprises supplying nutrient in a ratio of nitrogen to potassium of 1:Y, wherein Y is between 1.5 and 2.5.

Preferably, the method comprises supplying nutrient in a ratio of nitrogen to phosphorous of 1:X, wherein X is at least 2, and wherein a ratio of nitrogen to potassium is 1:Y, wherein Y is at least 1.

More preferably, the method comprises supplying nutrient in a ratio of nitrogen to phosphorous of 1:X, wherein X is at least 4, and wherein a ratio of nitrogen to potassium is 1:Y, wherein Y is greater than 1.

Even more preferably, the method comprises supplying nutrient in a ratio of nitrogen to phosphorous of 1:X, wherein X is between 6 and 15, and wherein a ratio of nitrogen to potassium is 1:Y, wherein Y is between 1 and 2.5.

In one embodiment, the method comprises supplying nutrient in a ratio of nitrogen to phosphorous of 1:X, wherein X is between 2 and 15, and wherein a ratio of nitrogen to potassium is 1:Y, wherein Y is between 1 and 2.5.

In one embodiment, the method comprises supplying nutrient in a ratio of nitrogen to phosphorous of 1:X, wherein X is at least 2, and wherein a ratio of nitrogen to potassium is 1:Y, wherein Y is at least 1, and wherein the nitrogen is supplied at an amount of at least 203.08 mg of nitrogen per m² per week.

In one embodiment, the method comprises supplying nutrient in a ratio of nitrogen to phosphorous of 1:X, wherein X is at between 6 and 15, and wherein a ratio of nitrogen to potassium is 1:Y, wherein Y is between 1 and 2.5, and wherein the nitrogen is supplied at an amount of at least 203.08 mg of nitrogen per m² per week.

In some embodiments, the method comprises supplying calcium. Optionally, the method comprises supplying at least 13.15 mg of calcium per m² per week. Optionally, the method comprises supplying less than 415.78 mg of calcium per m² per week. In one embodiment, the method comprises supplying between 13.15 mg and 415.78 mg of calcium per m² per week. Optionally, the method comprises supplying less than 1108.68 mg of calcium per m² per week. Optionally, the method comprises supplying at least 14.02 mg of calcium per m² per week. Optionally, the method comprises supplying less than 443.49 mg of calcium per m² per week. In one embodiment, the method comprises supplying between 14.02 mg and 443.49 mg of calcium per m² per week.

In some embodiments, the method comprises supplying magnesium. Optionally, the method comprises supplying at least 3.69 mg of magnesium per m² per week. Optionally, the method comprises supplying less than 148.18 mg of magnesium per m² per week. In one embodiment, the method comprises supplying between 3.69 mg and 148.18 mg of magnesium per m² per week. Optionally, the method comprises supplying at least 69.00 mg of magnesium per m² per week. In one embodiment, the method comprises supplying between 69.00 mg and 148.18 mg of magnesium per m² per week. Optionally, the method comprises supplying less than 395.16 mg of magnesium per m² per week. Optionally, the method comprises supplying at least 3.94 mg of magnesium per m² per week. Optionally, the method comprises supplying less than 158.06 mg of magnesium per m² per week. In one embodiment, the method comprises supplying between 3.94 mg and 158.06 mg of magnesium per m² per week.

In some embodiments, the method comprises supplying nitrite. Optionally, the method comprises supplying at least 0.01 mg of nitrite per m² per week. Optionally, the method comprises supplying less than 18.72 mg of nitrite per m² per week. In one embodiment, the method comprises supplying between 0.01 mg and 18.72 mg of nitrite per m² per week. Optionally, the method comprises supplying less than 17.55 mg of nitrite per m² per week. In one embodiment, the method comprises supplying between 0.01 mg and 17.55 g of nitrite per m² per week.

In some embodiments, the method comprises supplying nitrate. Optionally, the method comprises supplying at least 990.28 mg of nitrate per m² per week. Optionally, the method comprises supplying less than 4543.48 mg of nitrate per m² per week. In one embodiment, the method comprises supplying between 990.28 mg and 4543.48 mg of nitrate per m² per week. Optionally, the method comprises supplying at least 928.39 mg of nitrate per m² per week. Optionally, the method comprises supplying less than 4259.51 mg of nitrate per m² per week. In one embodiment, the method comprises supplying between 928.39 mg and 4259.51 mg of nitrate per m² per week.

In some embodiments, the method comprises supplying ammonium. Optionally, the method comprises supplying at least 0.01 mg of ammonium per m² per week. Optionally, the method comprises supplying less than 319.63 mg of ammonium per m² per week. In one embodiment, the method comprises supplying between 0.01 mg and 319.63 mg of ammonium per m² per week. Optionally, the method comprises supplying at least 144.24 mg of ammonium per m² per week. In one embodiment, the method comprises supplying between 144.24 mg and 319.63 mg of ammonium per m² per week. Optionally, the method comprises supplying less than 299.66 mg of ammonium per m² per week. In one embodiment, the method comprises supplying between 0.01 mg and 299.66 mg of ammonium per m² per week.

In some embodiments, the method comprises supplying sodium. Optionally, the method comprises supplying at least 30.12 mg of sodium per m² per week. Optionally, the method comprises supplying less than 641.60 mg of sodium per m² per week. In one embodiment, the method comprises supplying between 30.12 mg and 641.60 mg of sodium per m² per week. Optionally, the method comprises supplying at least 28.23 mg of sodium per m² per week. Optionally, the method comprises supplying less than 601.50 mg of sodium per m² per week. In one embodiment, the method comprises supplying between 28.23 mg and 601.50 mg of sodium per m² per week. Optionally, the method comprises supplying at least 35.04 mg of sodium per m² per week. In one embodiment, the method comprises supplying between 35.04 mg and 641.60 mg of sodium per m² per week. In one embodiment, the method comprises supplying between 30.12 mg and 40 mg of sodium per m² per week. Optionally, the method comprises supplying less than 87.60 mg of sodium per m² per week.

In some embodiments, the method comprises supplying manganese. Optionally, the method comprises supplying at least 2.51 mg of manganese per m² per week. Optionally, the method comprises supplying less than 23.29 mg of manganese per m² per week. In one embodiment, the method comprises supplying between 2.51 mg and 23.29 mg of manganese per m² per week. Optionally, the method comprises supplying at least 2.35 mg of manganese per m² per week. Optionally, the method comprises supplying less than 21.98 mg of manganese per m² per week. In one embodiment, the method comprises supplying between 2.35 mg and 21.98 mg of manganese per m² per week. Optionally, the method comprises supplying at least 4.92 mg of manganese per m² per week. In one embodiment, the method comprises supplying between 4.92 mg and 23.29 mg of manganese per m² per week. In one embodiment, the method comprises supplying between 2.51 mg and 7.5 mg of manganese per m² per week. Optionally, the method comprises supplying less than 12.24 mg of manganese per m² per week.

In some embodiments, the method comprises supplying copper. Optionally, the method comprises supplying at least 1.03 mg of copper per m² per week. Optionally, the method comprises supplying less than 2.97 mg of copper per m² per week. In one embodiment, the method comprises supplying between 1.03 mg and 2.97 mg of copper per m² per week. Optionally, the method comprises supplying at least 0.97 mg of copper per m² per week. Optionally, the method comprises supplying less than 2.79 mg of copper per m² per week. In one embodiment, the method comprises supplying between 0.97 mg and 2.79 mg of copper per m² per week. Optionally, the method comprises supplying at least 0.5 mg of copper per m² per week. In one embodiment, the method comprises supplying between 0.5 mg and 1.5 mg of copper per m² per week. Optionally, the method comprises supplying less than 2.52 mg of copper per m² per week.

In some embodiments, the method comprises supplying zinc. Optionally, the method comprises supplying at least 4.46 mg of zinc per m² per week. Optionally, the method comprises supplying less than 18.77 mg of zinc per m² per week. In one embodiment, the method comprises supplying between 4.46 mg and 18.77 mg of zinc per m² per week. Optionally, the method comprises supplying at least 4.18 mg of zinc per m² per week. Optionally, the method comprises supplying less than 17.60 mg of zinc per m² per week. In one embodiment, the method comprises supplying between 4.18 mg and 17.60 mg of zinc per m² per week. Optionally, the method comprises supplying at least 6.60 mg of zinc per m² per week. In one embodiment, the method comprises supplying between 6.60 mg and 18.77 mg of zinc per m² per week. In one embodiment, the method comprises supplying between 4.46 mg and 10 mg of zinc per m² per week. Optionally, the method comprises supplying less than 16.56 mg of zinc per m² per week.

In some embodiments, the method comprises supplying sulfur. Optionally, the method comprises supplying at least 51.64 mg of sulfur per m² per week. Optionally, the method comprises supplying less than 787.10 mg of sulfur per m² per week. In one embodiment, the method comprises supplying between 51.64 mg and 787.10 mg of sulfur per m² per week. Optionally, the method comprises supplying at least 48.42 mg of sulfur per m² per week. Optionally, the method comprises supplying less than 737.90 mg of sulfur per m² per week.

In one embodiment, the method comprises supplying between 48.42 mg and 737.90 mg of sulfur per m² per week. Optionally, the method comprises supplying at least 25 mg of sulfur per m² per week. In one embodiment, the method comprises supplying between 25 mg and 75 mg of sulfur per m² per week. Optionally, the method comprises supplying less than 129.12 mg of sulfur per m² per week.

In some embodiments, the method comprises supplying boron. Optionally, the method comprises supplying at least 1.64 mg of boron per m² per week. Optionally, the method comprises supplying less than 12.21 mg of boron per m² per week. In one embodiment, the method comprises supplying between 1.64 mg and 12.21 mg of boron per m² per week. Optionally, the method comprises supplying at least 1.54 mg of boron per m² per week. Optionally, the method comprises supplying less than 11.45 mg of boron per m² per week. In one embodiment, the method comprises supplying between 1.54 mg and 11.45 mg of boron per m² per week. Optionally, the method comprises supplying at least 2.28 mg of boron per m² per week. In one embodiment, the method comprises supplying between 2.28 mg and 12.21 mg of boron per m² per week. In one embodiment, the method comprises supplying between 1.64 mg and 5 mg of boron per m² per week. Optionally, the method comprises supplying less than 5.88 mg of boron per m² per week.

In some embodiments, the method comprises supplying iron. Optionally, the method comprises supplying at least 3.76 mg of iron per m² per week. Optionally, the method comprises supplying less than 109.85 mg of iron per m² per week. In one embodiment, the method comprises supplying between 3.76 mg and 109.85 mg of iron per m² per week. Optionally, the method comprises supplying at least 3.53 mg of iron per m² per week. Optionally, the method comprises supplying less than 102.99 mg of iron per m² per week. In one embodiment, the method comprises supplying between 3.53 mg and 102.99 mg of iron per m² per week. Optionally, the method comprises supplying at least 11.76 mg of iron per m² per week. In one embodiment, the method comprises supplying between 11.76 mg and 109.85 mg of iron per m² per week. In one embodiment, the method comprises supplying between 3.76 mg and 20 mg of iron per m² per week. Optionally, the method comprises supplying less than 29.40 mg of iron per m² per week.

In some embodiments, the method comprises supplying molybdenum. Optionally, the method comprises supplying at least 0.16 mg of molybdenum per m² per week. Optionally, the method comprises supplying less than 1.80 mg of molybdenum per m² per week. In one embodiment, the method comprises supplying between 0.16 mg and 1.80 mg of molybdenum per m² per week. Optionally, the method comprises supplying at least 0.15 mg of molybdenum per m² per week. Optionally, the method comprises supplying less than 1.68 mg of molybdenum per m² per week. In one embodiment, the method comprises supplying between 0.15 mg and 1.68 mg of molybdenum per m² per week. Optionally, the method comprises supplying at least 0.60 mg of molybdenum per m² per week. In one embodiment, the method comprises supplying between 0.60 mg and 1.80 mg of molybdenum per m² per week. In one embodiment, the method comprises supplying between 0.16 mg and 1.2 mg of molybdenum per m² per week.

In some embodiments, the method comprises supplying chloride. Optionally, the method comprises supplying at least 1.92 mg of chloride per m² per week. Optionally, the method comprises supplying less than 1171.68 mg of chloride per m² per week. In one embodiment, the method comprises supplying between 1.92 mg and 1171.68 mg of chloride per m² per week. Optionally, the method comprises supplying at least 1.80 mg of chloride per m² per week. Optionally, the method comprises supplying less than 1098.45 mg of chloride per m² per week. In one embodiment, the method comprises supplying between 1.80 mg and 1098.45 mg of chloride per m² per week. Optionally, the method comprises supplying at least 0.5 mg of chloride per m² per week. In one embodiment, the method comprises supplying between 0.5 mg and 10 mg of chloride per m² per week. In one embodiment, the method comprises supplying between 0.5 mg and 2.5 mg of chloride per m² per week. Optionally, the method comprises supplying at least 1.5 mg of chloride per m² per week. In one embodiment, the method comprises supplying between 1.5 mg and 2.5 mg of chloride per m² per week. Optionally, the method comprises supplying less than 4.80 mg of chloride per m² per week.

In some embodiments, the method comprises supplying sulfate. Optionally, the method comprises supplying at least 124.28 mg of sulfate per m² per week. Optionally, the method comprises supplying less than 2183.96 mg of sulfate per m² per week. In one embodiment, the method comprises supplying between 124.28 mg and 2183.96 mg of sulfate per m² per week. Optionally, the method comprises supplying at least 50 mg of sulfate per m² per week. In one embodiment, the method comprises supplying between 50 mg and 200 mg of sulfate per m² per week.

The amount of nutrients applied may also be expressed in mg per m² per day. In some embodiments, the amount of nutrients per m² per day is an average amount. In other words, in some embodiments the nutrients do not need applying every day. For example, over a period of a week, the *Sphagnum* may be supplied with 3.5 L on four occasions, while in another example the *Sphagnum* may be supplied with 2 L every day (i.e. seven times). In both examples, a total of 14 L is applied per week, providing an average of 2 L per day (even though 2 L does not need to be applied each and every day). The average nutrient application rate in mg per m² per day can thus be calculated by dividing the total mg per m² in a set time period by the number of days in that time period. It will be appreciated by those skilled in the art that the values of nutrients in mg per m² per week disclosed herein can readily be converted to an application rate in mg per m² per day by dividing the values in mg per m² per week by seven, and vice versa.

According to an aspect of the invention, there is provided a nutrient composition for cultivating *Sphagnum,* the nutrient composition comprising nitrogen, phosphorus, and/or potassium.

Features of this aspect may be readily applied to the other aspects and vice versa. For example, it will be apparent that the concentrations of nutrients (e.g. in mg per L) described in relation to the method can be present in the nutrient composition.

Disclosed herein is a nutrient composition for cultivating *Sphagnum,* the nutrient composition comprising one or more nutrients selected from the group consisting of:
a) phosphorus, wherein the phosphorus is present at a concentration of at least 1.5 mg/L (e.g. 4-60 mg/L);
b) potassium, wherein the potassium is present at a concentration of at least 7 mg/L (e.g. 7-155 mg/L); and
c) nitrogen, wherein the nitrogen is present at a concentration of at least 5.0 mg/L (e.g. 5-50 mg/L).

In one embodiment a nutrient composition comprises at least 2 (e.g. at least 3, 4, 5, 6, 7, 8, 9 10, 11, 12, 13, 14, 15, 16 or 17) nutrients selected from the group consisting of: phosphorus, potassium, nitrogen, magnesium, calcium, iron, sulphate, nitrate, ammonium, sodium, manganese, copper, zinc, sulphur, boron, molybdenum, chloride, and nitrite. Preferably a nutrient composition comprises phosphorus, potassium, nitrogen, magnesium, calcium, iron, sulphate, nitrate, ammonium, sodium, manganese, copper, zinc, sulphur, boron, molybdenum, chloride, and nitrite.

In one embodiment a nutrient composition comprises phosphorus, potassium, and/or nitrogen. Preferably a nutrient composition comprises phosphorus, potassium, and nitrogen.

In another embodiment a nutrient composition comprises one or more nutrients selected from the group consisting of: phosphorus, potassium, nitrogen, magnesium, calcium, iron, sulphate, nitrate, ammonium, and nitrite. In one embodiment a nutrient composition comprises at least 2 (e.g. at least 3, 4, 5, 6, 7, 8 or 9) nutrients selected from the group consisting of: phosphorus, potassium, nitrogen, magnesium, calcium, iron, sulphate, nitrate, ammonium, and nitrite. Preferably, a nutrient composition comprises phosphorus, potassium, nitrogen, magnesium, calcium, iron, sulphate, nitrate, ammonium, and nitrite.

Phosphorus may be present in a nutrient composition of the invention at a concentration of 4-60 mg/L, e.g. 10-55 mg/L. In one embodiment phosphorus is present at a concentration of 4-30 mg/L, preferably 8-15 mg/L.

Potassium may be present in a nutrient composition of the invention at a concentration of 7-155 mg/L, e.g. 65-152 mg/L. In one embodiment potassium is present at a concentration of 50-160 mg/L, preferably 20-40 mg/L.

Magnesium may be present in a nutrient composition of the invention at a concentration of 0.1-20 mg/L, e.g. 0.3-14 mg/L. In one embodiment magnesium is present at a concentration of 2-20 mg/L, preferably 2.5-7.5 mg/L.

Calcium may be present in a nutrient composition of the invention at a concentration of 1-40 mg/L, e.g. 1.1-37 mg/L. In one embodiment calcium is present at a concentration of 10-35 mg/L, preferably 25-30 mg/L.

Iron may be present in a nutrient composition of the invention at a concentration of 0.2-15 mg/L, e.g. 0.3-9.2 mg/L. In one embodiment iron is present at a concentration of 2.5-10 mg/L, preferably 5-9 mg/L.

Sulphate may be present in a nutrient composition of the invention at a concentration of 5-200 mg/L, e.g. 10-182 mg/L. In one embodiment sulphate is present at a concentration of 60-190 mg/L, preferably 140-165 mg/L.

Nitrate may be present in a nutrient composition of the invention at a concentration of 50-400 mg/L, e.g. 82-379 mg/L. In one embodiment nitrate is present at a concentration of 100-200 mg/L, preferably 130-150 mg/L.

Ammonium may be present in a nutrient composition of the invention at a concentration of 0.01-60 mg/L, e.g. 0.1-26.7 mg/L. In one embodiment ammonium is present at a concentration of 10-30 mg/L, preferably 20-30 mg/L.

Sodium may be present in a nutrient composition of the invention at a concentration of 2-70 mg/L, e.g. 2.5-53.5 mg/L. In one embodiment sodium is present at a concentration of 5-8 mg/L, preferably 5-7 mg/L.

Manganese may be present in a nutrient composition of the invention at a concentration of 0.1-10 mg/L, e.g. 0.2-1.95 mg/L. In one embodiment manganese is present at a concentration of 1-2.5 mg/L, preferably 1.5-2.25 mg/L.

Copper may be present in a nutrient composition of the invention at a concentration of 0.01-5 mg/L, e.g. 0.09-0.25 mg/L. In one embodiment copper is present at a concentration of 0.2-0.3 mg/L, preferably 0.22-0.27 mg/L.

Zinc may be present in a nutrient composition of the invention at a concentration of 0.2-5 mg/L, e.g. 0.37-1.56 mg/L. In one embodiment zinc is present at a concentration of 1-2 mg/L, preferably 1.25-1.75 mg/L.

Sulphur may be present in a nutrient composition of the invention at a concentration of 1-70 mg/L, e.g. 4.3-65.6 mg/L. In one embodiment sulphur is present at a concentration of 40-65 mg/L, preferably 55-60 mg/L.

Boron may be present in a nutrient composition of the invention at a concentration of 0.1-5 mg/L, e.g. 0.14-1.02 mg/L. In one embodiment boron is present at a concentration of 0.5-1.2 mg/L, preferably 0.8-1.0 mg/L.

Molybdenum may be present in a nutrient composition of the invention at a concentration of 0.001-0.30 mg/L, e.g. 0.01-0.15 mg/L. In one embodiment molybdenum is present at a concentration of 0.05-0.25 mg/L, preferably 0.12-0.16 mg/L.

Chloride may be present in a nutrient composition of the invention at a concentration of 0.01-5 mg/L, e.g. 0.16-97.64 mg/L. In one embodiment chloride is present at a concentration of 5-20 mg/L, preferably 10-18 mg/L.

Nitrite may be present in a nutrient composition of the invention at a concentration of 0.01-5 mg/L, e.g. 0.01-1.56 mg/L. In one embodiment nitrite is present at a concentration of 1-2 mg/L, preferably 1.2-1.6 mg/L.

A nutrient composition for use in the invention may comprise one or more of:
a) 10.5-55 mg/L phosphorus;
b) 65-152 mg/L potassium;
c) 0.3-14 mg/L of magnesium;
d) 1-37 mg/L calcium;
e) 0.3-10 mg/L iron;
f) 10-183 mg/L sulphate;
g) 82-379 mg/L nitrate;
h) 0.01-27 mg/L ammonium;
i) 2-54 mg/L sodium;
j) 0.2-2 mg/L manganese;
k) 0.09-0.3 mg/L copper;
l) 0.3-1.6 mg/L zinc;
m) 4.3-66 mg/L sulphur;
n) 0.1-1.1 mg/L boron;
o) 0.01-0.2 mg/L molybdenum;
p) 0.1-98 mg/L chloride; and
q) 0.01-2 mg/L nitrite.

In one embodiment a method comprises supplying at least one (e.g. at least 2, 3, 4, 5, 6, 7, 8, 9, 10, 11, 12, 13, 14, 15, or 16) of the following:
a) 18-93 mg/m²/day of phosphorus (e.g. 30-70 mg/m²/day);
b) 114-260 mg/m²/day of potassium (e.g. 150-200 mg/m²/day);
c) 0.5-23 mg/m²/day of magnesium (e.g. 5-15 mg/m²/day);
d) 2-64 mg/m²/day of calcium (e.g. 20-40 mg/m²/day);
e) 0.5-16 mg/m²/day of iron (e.g. 5-10 mg/m²/day);
f) 17-312 mg/m²/day of sulphate (e.g. 50-200 mg/m²/day);
g) 141-650 mg/m²/day of nitrate (e.g. 250-400 mg/m²/day);
h) 0.01-46 mg/m²/day of ammonium (e.g. 10-30 mg/m²/day).
i) 4-92 mg/m²/day sodium (e.g. 20-50 mg/m²/day);
j) 0.3-3.5 mg/m²/day manganese (e.g. 1-2 mg/m²/day);
k) 0.1-0.5 mg/m²/day copper (e.g. 0.2-0.2 mg/m²/day);
l) 0.5-3 mg/m²/day zinc (e.g. 1-2 mg/m²/day);
m) 7-113 mg/m²/day sulphur (e.g. 20-80 mg/m²/day);
n) 0.2-1.8 mg/m²/day boron (e.g. 0.5-0.7 mg/m²/day);
o) 0.01-0.3 mg/m²/day molybdenum (e.g. 0.07-0.1 mg/m²/day);
p) 0.2-168 mg/m²/day chloride (e.g. 20-100 mg/m²/day); or
q) 0.01-3 mg/m²/day nitrite (e.g. 0.5-1.5 mg/m²/day).

In one embodiment a method comprises supplying at least one (e.g. at least 2, 3, 4, 5, 6, 7, 8, 9, 10, 11, 12, 13, 14, 15, or 16) of the following:
a) 18.85-92.60 mg/m²/day of phosphorus (e.g. 30-70 mg/m²/day);
b) 114.58-259.04 mg/m²/day of potassium (e.g. 150-200 mg/m²/day);
c) 0.56-22.58 mg/m²/day of magnesium (e.g. 5-15 mg/m²/day);
d) 2.00-63.36 mg/m²/day of calcium (e.g. 20-40 mg/m²/day);
e) 0.54-15.69 mg/m²/day of iron (e.g. 5-10 mg/m²/day);
f) 17.75-311.99 mg/m²/day of sulphate (e.g. 50-200 mg/m²/day);
g) 141.47-649.07 mg/m²/day of nitrate (e.g. 250-400 mg/m²/day);
h) 0.01-45.66 mg/m²/day of ammonium (e.g. 10-30 mg/m²/day).
i) 4.30-91.66 mg/m²/day sodium (e.g. 20-50 mg/m²/day);
j) 0.36-3.33 mg/m²/day manganese (e.g. 1-2 mg/m²/day);
k) 0.15-0.42 mg/m²/day copper (e.g. 0.2-0.2 mg/m²/day);
l) 0.64-2.68 mg/m²/day zinc (e.g. 1-2 mg/m²/day);
m) 7.38-112.44 mg/m²/day sulphur (e.g. 20-80 mg/m²/day);
n) 0.23-1.74 mg/m²/day boron (e.g. 0.5-0.7 mg/m²/day);
o) 0.02-0.26 mg/m²/day molybdenum (e.g. 0.07-0.1 mg/m²/day);
p) 0.27-167.38 mg/m²/day chloride (e.g. 20-100 mg/m²/day); or
q) 0.01-2.67 mg/m²/day nitrite (e.g. 0.5-1.5 mg/m²/day).

In one embodiment a method comprises supplying at least one of the following:
a) 18.85-92.60 mg/m²/day of phosphorus;
b) 114.58-259.04 mg/m²/day of potassium;
c) 0.56-22.58 mg/m²/day of magnesium;
d) 2.00-63.36 mg/m²/day of calcium;
e) 0.54-15.69 mg/m²/day of iron;
f) 17.75-311.99 mg/m²/day of sulphate;
g) 141.47-649.07 mg/m²/day of nitrate; or
h) 0.01-45.66 mg/m²/day of ammonium.

In one embodiment a method comprises supplying the following:
a) 18.85-92.60 mg/m²/day of phosphorus;
b) 114.58-259.04 mg/m²/day of potassium;
c) 0.56-22.58 mg/m²/day of magnesium;
d) 2.00-63.36 mg/m²/day of calcium;
e) 0.54-15.69 mg/m²/day of iron;
f) 17.75-311.99 mg/m²/day of sulphate;
g) 141.47-649.07 mg/m²/day of nitrate; and
h) 0.01-45.66 mg/m²/day of ammonium.

In one embodiment a method comprises supplying the following:
a) 18.85-92.60 mg/m²/day of phosphorus;
b) 114.58-259.04 mg/m²/day of potassium;
c) 0.56-22.58 mg/m²/day of magnesium;
d) 2.00-63.36 mg/m²/day of calcium;
e) 0.54-15.69 mg/m²/day of iron;
f) 17.75-311.99 mg/m²/day of sulphate;
g) 141.47-649.07 mg/m²/day of nitrate;
h) 0.01-45.66 mg/m²/day of ammonium.
i) 4.30-91.66 mg/m²/day sodium;
j) 0.36-3.33 mg/m²/day manganese;
k) 0.15-0.42 mg/m²/day copper;
l) 0.64-2.68 mg/m²/day zinc;
m) 7.38-112.44 mg/m²/day sulphur;
n) 0.23-1.74 mg/m²/day boron;
o) 0.02-0.26 mg/m²/day molybdenum;
p) 0.27-167.38 mg/m²/day chloride; and
q) 0.01-2.67 mg/m²/day nitrite.

In one embodiment a method comprises supplying:
a) 18.85-92.60 mg/m²/day of phosphorus;
b) 114.58-259.04 mg/m²/day of potassium; and
c) 0.01-2.67 mg/m²/day nitrite and/or 141.47-649.07 mg/m²/day of nitrate and/or 0.01-45.66 mg/m²/day of ammonium.

The nutrient composition or nutrient according to the invention may be applied. Thus, in one embodiment the term "supplying" means "applied" and "supply" means "apply".

The term "mg/m²/day" may refer to mg/m² of an area at which the *Sphagnum* is present (e.g. a field) per day.

A method of the invention may comprise supplying (e.g. irrigating) with a nutrient composition 1, 2 or 3 times per week, preferably 3 times per week. In one embodiment the supplying (e.g. irrigating) comprises supplying at least 1, 2, 3, or 4 litres of nutrient composition, preferably 4 litres of nutrient composition, more preferably 4 litres, 3 times per week.

In one embodiment the invention comprises supplying a nutrient composition at at least 0.5, 1, 2.5, 2, 2.5, 3 or 3.5 L/m² of area at which the *Sphagnum* is present. Preferably, a nutrient composition is supplied at 4 L/m² of area at which the *Sphagnum* is present. More preferably, the invention comprises applying 4 L/m² of area at which the *Sphagnum* is present (e.g. the surface at which the *Sphagnum* is present) 3 times per week. In one embodiment, a nutrient composition is supplied at 3.75 L/m² of area at which the *Sphagnum* is present 3 times per week.

A nutrient composition according to the invention may also be present as a stock (e.g. undiluted) solution and this is encompassed by one aspect of the present invention. Preferably, 50 ml of said stock solution may be diluted in 1 litre of water prior to supplying to *Sphagnum* according to the invention (e.g. 200 ml may be diluted in 4 litres of water). Thus, the skilled person can derive that the concentrations of nutrients present in a stock solution of the invention based on said dilution. For example, based on the above preferred embodiment a stock solution of the invention may comprise 20x higher nutrient concentrations than the diluted nutrient composition used in a method of the invention.

A nutrient composition may be supplied to *Sphagnum* (e.g. directly) or to/via a surface on which *Sphagnum* is present (e.g. by irrigating said surface). Preferably a nutrient composition is supplied to the *Sphagnum,* e.g. by irrigating said *Sphagnum* with the nutrient composition. Preferably, the nutrients are supplied directly to the *Sphagnum,* rather than by supplying it to a substrate on which the *Sphagnum* is grown. Preferably, the supplying nutrients does not comprise saturating the *Sphagnum.* Preferably, the supplying nutrients does not comprise saturating a substrate on which the *Sphagnum* is grown. Preferably, the nutrients are supplied to the top of the *Sphagnum.* More preferably, the nutrients are supplied by spray irrigation. Preferably, the *Sphagnum* is not cultivated in a liquid medium. For example, the *Sphagnum* may be cultivated on a growth surface, such as a peat surface.

Disclosed herein is a method for cultivating *Sphagnum* comprising the use of irrigation with a nutrient composition, optionally wherein the *Sphagnum* and/or the surface on which the *Sphagnum* is present is irrigated with said nutrient composition.

A surface/media on which *Sphagnum* is present may be any surface/media suitable for cultivating *Sphagnum,* preferably said surface/media is a peat surface.

A nutrient composition described herein may be used in a method for cultivating *Sphagnum* that has been applied to a surface of a field, the method comprising irrigating the *Sphagnum,* wherein the irrigating comprises applying a nutrient composition of the invention to a surface of the *Sphagnum* and/or to the surface of the field (preferably to a surface of the *Sphagnum).*

In one embodiment the *Sphagnum* is *Sphagnum* that has been applied to a surface of a field. In some examples, applying *Sphagnum* to a surface of the field may mean planting the *Sphagnum* in a field. The method may comprise applying a nutrient composition to a surface of the *Sphagnum* and/or to the surface of the field, preferably applying water to a surface of the *Sphagnum.*

Advantageously, the invention provides a method for growing *Sphagnum* that does not require the provision of banks, ditches, and/or underground pipes to ensure saturation of the ground and raising of the water table. In some embodiments, where a method of the invention comprises cultivating *Sphagnum* in a field, said field does not comprise a bank, ditch and/or underground pipe (preferably bank, ditch, and underground pipe), e.g. a bank, ditch and/or underground pipe configured to supply water to the *Sphagnum,* for example by raising the water table.

Moreover, the methods of the invention are more economical/less wasteful as less water is required when compared to conventional paludiculture methods.

In one embodiment a nutrient composition is supplied by irrigation, preferably controllable irrigation.

In one embodiment the irrigation (e.g. controllable irrigation) of the invention does not comprise saturating the media on/in which the *Sphagnum* is present (e.g. a field) with nutrient composition to submerge at least a portion of the *Sphagnum* with nutrient composition. For example the method may not comprise submerging more than 60%, 50%, 40%, 30%, 20%, 10% or 5% of a surface area of *Sphagnum* with nutrient composition (preferably no more than 2%, more preferably 0%). For example the method may not comprise submerging more than 60%, 50%, 40%, 30%, 20%, 10% or 5% of a surface area of a growing portion of *Sphagnum* with nutrient composition (preferably no more than 2%, more preferably 0%). Without wishing to be bound by theory, the present inventors believe that the methods of the invention apply nutrient composition in a manner such that it is more accessible to the *Sphagnum* (preferably the growing portions thereof) while at the same time allowing improved gas exchange between the *Sphagnum* (preferably the growing portions thereof) and the air by ensuring that the *Sphagnum* is not saturated with nutrient composition. Preferably, therefore, the irrigation (e.g. controllable irrigation) does not comprise saturating the media on/in which the *Sphagnum* is present to submerge a growing portion of the *Sphagnum* with nutrient composition.

In some embodiments a field for cultivating *Sphagnum* has a water table and the irrigation (e.g. controllable irrigation) of the invention does not increase a level of the water table, e.g. increasing a level of the water table such that at least a portion of the *Sphagnum* (preferably a growing portion) is submerged with water/nutrient composition. It is surprising that good growth can occur without raising the water table, as it is established theory in the art that optimal growth rates can only be obtained by raising the water table using conventional paludiculture techniques and that *Sphagnum* only grows in the wild where high water tables are maintained.

In a related aspect, the invention provides a *Sphagnum* obtainable by a method of the invention.

The term "obtainable" as used herein also encompasses the term "obtained". In one embodiment the term "obtainable" means obtained.

Disclosed herein is use of a nutrient (e.g. nutrient composition) for cultivating *Sphagnum.*

In one aspect, the invention provides use of a nutrient composition for cultivating *Sphagnum,* wherein the nutrient composition comprises nitrogen, phosphorous, and/or potassium.

Preferably, the use further comprises supplying the nutrient to the *Sphagnum.*

Preferably, the use comprises supplying the nutrient composition at an amount comprising:
a) between 223.61 mg and 1280.25 mg of nitrogen per m² per week;
b) between 131.93 mg and 648.18 mg of phosphorous per m² per week; and/or
c) between 802.09 mg and 1813.26 mg of potassium per m² per week.

The nutrient composition may comprise any of the features of the nutrient composition described above.

In some embodiments the methods herein may be considered non-paludiculture methods. The term "non-paludiculture method" as used herein means that the method does not employ paludiculture. In this respect, in some embodiments, the methods of the invention are more closely related to agricultural or horticultural techniques for growing other plants and/or crops. Paludiculture is a wet agriculture technique that employs wet (saturated) soils to cultivate a plant or crop, wherein water tables are at or near to the surface of the field. In one embodiment paludiculture comprises wetting a field to increase the level of the water table, e.g. such that *Sphagnum* in said field is partially or wholly submerged. Thus, in the present invention, the level of the water table is preferably not such that the *Sphagnum* is partially or wholly submerged. In some embodiments, the methods of the invention do not comprise rewetting a field (or a peatland).

The methods of the invention comprise cultivating *Sphagnum.* Cultivating *Sphagnum* encompasses maintaining the *Sphagnum* in a live state. Preferably, the term "cultivating" as used herein refers to promoting growth of the *Sphagnum.* Preferably, the methods of the invention comprise growing *Sphagnum.*

The method of the invention may be carried out under any conditions in which *Sphagnum* will grow. For example, the *Sphagnum* may be present on a field or alternatively present on a growth medium (e.g. peat), e.g. in a greenhouse.

The methods of the invention may comprise cultivating *Sphagnum* in a field. The term "field" as used herein refers to any suitable area of land in which the *Sphagnum* of the invention can be grown. The term "field" encompasses any such area of land, including enclosed, covered or uncovered land. In one embodiment, the field may be a site previously used for agricultural purposes, such as for the growth of crops or for livestock. In another embodiment the field is a moor. Preferably, the "surface of the field" is a peat, soil, or sand surface, more preferably a peat surface. The surface of the field is the uppermost surface of the field, for example exposed to the air (before *Sphagnum* is applied). Preferably, the surface of the field does not include a mat (e.g. capillary floatable matting) or a fleece. In some embodiments, the surface of the field may be a peat surface applied over the field (e.g. over a concrete or other surface), however in some embodiments the presence of a concrete or other surface may preferably be excluded. In some such embodiments, the field may be covered, for example with a polytunnel or greenhouse.

Any suitable *Sphagnum* species (or preferably a combination thereof) may be used in the present invention. As different species of *Sphagnum* may have different growth requirements, the *Sphagnum* species for use in the invention may be selected depending on the environment or media in which the *Sphagnum* is grown.

In one embodiment, the invention comprises the use of one or more *Sphagnum* species. Any species could be used, but in one embodiment, the invention comprises the use of one or more *Sphagnum* species selected from the group consisting of: *Sphagnum angustifolium, Sphagnum australe, Sphagnum capillifolium, Sphagnum central, Sphagnum compactum, Sphagnum cuspidatum, Sphagnum denticulatum, Sphagnum fallax, Sphagnum fimbriatum, Sphagnum fuscum, Sphagnum imbricatum (austinii), Sphagnum inundatum, Sphagnum magellanicum (medium), Sphagnum palustre, Sphagnum papillosum, Sphagnum pulcrum, Sphagnum russowii, Sphagnum squarrosum, Sphagnum subnitens, Sphagnum tenellum,* and *Sphagnum cristatum.* In one embodiment the method comprises the use of one or more *Sphagnum* species selected from the group consisting of: *Sphagnum palustre, Sphagnum capillifolium, Sphagnum capillifolium rubellum, Sphagnum subnitens, Sphagnum denticulatum, Sphagnum squarrosum, Sphagnum fallax, Sphagnum fimbriatum, Sphagnum cuspidatum, Sphagnum magellanicum,* and *Sphagnum papillosum.* In one embodiment, the invention comprises the use of one or more *Sphagnum* species selected from the group consisting of: *Sphagnum palustre, Sphagnum capillifolium, Sphagnum capillifolium rubellum, Sphagnum subnitens, Sphagnum squarrosum, Sphagnum magellanicum,* and *Sphagnum papillosum.*

Preferably a *Sphagnum* species for use in the invention may be one or more selected from the group consisting of: *Sphagnum palustre, Sphagnum capillifolium, Sphagnum* fallax, *Sphagnum magellanicum, Sphagnum papillosum,* and *Sphagnum squarrosum.*

More preferably, a *Sphagnum* species for use in the invention may be one or more selected from the group consisting of: *Sphagnum palustre, Sphagnum capillifolium,* and *Sphagnum squarrosum.*

In a particularly preferred embodiment the *Sphagnum* is *Sphagnum palustre.* For example, *Sphagnum palustre* may be preferable for use in a growing medium because of its physical properties.

It is also envisaged that the invention could be applied to any hybrid *Sphagnum* species.

In one embodiment a method of the invention comprises the use of at least 2, 3, 4, or 5 *Sphagnum* species, preferably the use of at least 5 (e.g. 6) *Sphagnum* species.

Preferably, the *Sphagnum* does not include mosses which in some cases are colloquially referred to as *Sphagnum* but are not "true" *Sphagnum.* In other words, the term *Sphagnum* refers to the genus *Sphagnum* and does not include mosses which are not part of the genus *Sphagnum.* For example, preferably the *Sphagnum* does not include *Flatbergium sericeum,* which has been classified as not a species of *Sphagnum.* In other examples, preferably the *Sphagnum* does not include *Ambuchanania leucobryoides* or *Eosphagnum inretortum,* both of the order Sphagnales, but not of the genus *Sphagnum.*

*Sphagnum* has significantly different growth requirements to many plants, including other mosses, and grows primarily in wet conditions such as on peatlands. For example, *Sphagnum* would not be suitable for growing on a bare rock face or a wall, unlike other mosses.

*Sphagnum* for use in a method of the present invention has preferably been grown *in vitro,* e.g. using tissue culture techniques known in the art. In one embodiment *Sphagnum* for use in a method of the invention is micro-propagated *Sphagnum.* In a particularly preferred embodiment *Sphagnum* for use in the invention is grown in the presence of a nutrient composition described herein. Advantageously, the present inventors have found that said *Sphagnum* shows improved growth under high nutrient conditions.

In one embodiment a method of the invention comprises applying *Sphagnum* to a surface, such as a surface of a field (e.g. compost, preferably peat). The *Sphagnum* applied can be in any suitable form.

In one embodiment a hummock comprising *Sphagnum* strands is used in a method of the invention. Said *Sphagnum* may be grown in a soil or peat. In a preferred embodiment a method of the invention comprises the use of BeadaHumok^{™}, which is commercially available from BeadaMoss^{®}, UK.

In some embodiments a field in which *Sphagnum* is grown, in accordance with the invention, comprises a water table.

The term "water table" as used herein refers to an upper surface of a zone of saturation in the field; the zone of saturation being a region where the pores and fractures of the subsurface of the field are saturated with water. In other words, the term "water table" refers to an upper surface of subsurface materials in a field that are saturated at a given vicinity in the field. The water table may vary naturally due to seasonal changes, such as precipitation and/or evapotranspiration.

The "water table" is usually presented as a depth below the surface of a field. The surface of the field is the upper surface below the *Sphagnum.* This may be the upper surface of soil or peat below the *Sphagnum.*

The water table of the field may be at least 30, 35, 40, 45, 50, 55, 60, 65, 70, 75, 80, 85, 90, 95 or 100 cm below the surface of the field. In one embodiment the water table is at least 50 cm below the surface of the field, such as at least 75 cm below the surface of the field. Preferably the water table is at least 1 metre below the surface of the field. Preferably the water table is at a distance below the surface of the field to provide access onto the field, e.g. using machinery.

The term "water table" as used herein is distinct to the term "perched water table", which is an area of saturation that occurs above (at a shallower depth from the surface of the field) the "water table" and which is separated from the "water table" by an area of non-saturation.

The irrigation of the invention may result in the formation of a perched water table, e.g. temporarily upon irrigation. For example, the method of the invention may form a layer of water/nutrient composition within the *Sphagnum,* which may be regarded as a perched water table. In some embodiments, the non-saturated portion of the field between the water table and a perched water table has a depth of at least 25 cm, at least 50 cm or at least 1 metre.

However, it is preferable that the irrigation of the invention does not form a perched water table (i.e. does not saturate with water a portion of the field that is above the water table), for example to minimise water/nutrient composition wastage.

In a preferred embodiment nutrient composition/water applied during an irrigation (e.g. controllable irrigation) step of a method of the invention does not contribute to the water table. In other words, in some embodiments the water applied during the irrigation (e.g. controllable irrigation) of the method does not form/become part of the water table, e.g. by filtering through the field and meeting the water table. In some embodiments less than 10% or 5% (preferably less than 1%, most preferably 0%) of the nutrient composition/water applied during the irrigation (e.g. controllable irrigation) of the method forms/becomes part of the water table.

In some embodiments, the irrigation (e.g. controllable irrigation) of the invention may reduce/prevent evaporation of water from a field and thus indirectly affect the level of a water table of said field.

In one embodiment, the irrigation (e.g. controllable irrigation) step of a method of the invention does not change the level of the water table; preferably the irrigation step of the invention does not increase the level of the water table. That is, the irrigation may comprise applying nutrient composition for growth of the *Sphagnum* rather than to raise the water table. In particular, the irrigation is preferably independent of the water table. The term "does not change the level of the water table" as used herein may mean that the irrigation does not substantially change the level of the water table. Said irrigation may change the level by less than 5%, 2%, 1% or 0.5%, preferably less than 0.1%. More preferably, the term "does not change the level of the water table" as used herein means that the irrigation does not change the level of the water table at all (i.e. the change in the level is 0%). In one embodiment, the irrigation does not change the level of the water table by more than 20 cm, 15 cm, 10 cm or 5 cm. Preferably, the irrigation does not change the level of the water table by more than 2 cm.

The methods of the invention do not exclude a change in the level of the water table occurring by other means, such as natural phenomena including rainfall and the like, including the natural flow of water from surrounding areas/flooding. In some embodiments the field may be shielded from precipitation (e.g. rainfall) to minimise any changes to the water table by said precipitation.

In some embodiments, the irrigation does not saturate with water/nutrient composition a portion of the field that is above the water table of the field. In some embodiments, the irrigation does not saturate with water/nutrient composition a portion of the field that is below the surface of the field. For example, less than 75% of the field above the water table is saturated with water/nutrient composition, preferably less than 50%, more preferably less than 25%. For example, the irrigation does not saturate a portion below the surface of the field having a height of, for example, at least 1 cm, preferably at least 5 cm, more preferably at least 10 cm, still more preferably at least 20 cm, even still more preferably at least 30 cm, yet still more preferably at least 40 cm, most preferably at least 50 cm. For example, the irrigation does not saturate a portion below the surface of the field that is within 1 cm of the water table, preferably within 5 cm, more preferably within 10 cm, still more preferably within 20 cm, even still more preferably within 30 cm, yet still more preferably within 40 cm, most preferably a within 50 cm of the water table.

The term "controllably irrigating" as used herein refers to artificial irrigation, rather than natural irrigation (e.g. by precipitation), wherein one or more irrigation parameters are controlled. The irrigation parameters may be one or more of (preferably all of) the amount of nutrient composition applied, the rate at which nutrient composition is applied, the location at which the nutrient composition is applied, the timing of irrigation or the frequency of irrigation. In one embodiment, the controllably irrigating comprises applying a nutrient composition of the invention at an amount of 2.6 l/m² whenever the *Sphagnum* surface is observed to be dry. For example, a nutrient composition of the invention may be applied when the growing portion of the *Sphagnum* is observed to be dry, preferably when the capitula of the *Sphagnum* is observed to be dry. For example, irrigation is applied at least once a week, preferably at least twice a week, more preferably at least three times a week, most preferably every day (i.e. 7 times a week). In some embodiments, the controllably irrigating comprises applying a nutrient composition of the invention at an amount of 0.5-5 l/m², for example applied at least once a week, preferably every day. Preferably, the controllably irrigating comprises applying a nutrient composition of the invention at an amount of 2-3 l/m², for example applied at least once a week, preferably every day. In some embodiments, a total amount of a nutrient composition of the invention applied is 3.5-35 l/m² per week, preferably 14-21 l/m² per week, most preferably 18.2 l/m² per week.

Controllably irrigating may be achieved using controllable irrigation. The method of the invention may comprise controllably irrigating.

The irrigation (e.g. controllable irrigation) may be achieved using any means known in the art. In one embodiment, the irrigation comprises applying a nutrient composition of the invention to the *Sphagnum* from above the *Sphagnum.* In a preferred embodiment, the irrigation comprises overhead irrigation configured to apply a nutrient composition of the invention to the *Sphagnum* from above. The irrigation may be spray irrigation, drip irrigation or a combination thereof.

Spray irrigation may comprise the use of a sprayer or sprinkler device. A spray irrigation system may be positioned such that the irrigation is applied from above the *Sphagnum.* For example, on a small scale, the spray irrigation system may comprise static sprinkler devices arranged at regular intervals across the surface of the field. On a larger scale, the spray irrigation system may comprise a mobile device, such as a mobile gantry movable over the field. Mobile spray irrigation systems or overhead spray irrigation systems, such as those used in agriculture, may be used. This may require less infrastructure than static irrigation systems. Spray irrigation may provide direct irrigation of the *Sphagnum,* and may mimic rainfall, which has the advantage of applying water directly to a surface of the *Sphagnum,* and preferably to a growing portion of the *Sphagnum.*

Drip irrigation may comprise the use of pipes to supply a nutrient composition of the invention to emitters positioned along the pipes. The emitters may drip a nutrient composition of the invention onto the surface of the *Sphagnum* (e.g. a surface-exposed portion of the *Sphagnum* or a surface within the body of *Sphagnum*) and/or the field, for example at regularly spaced intervals along the pipes, e.g. adjacent to growing *Sphagnum.*

In some embodiments, a combination of spray irrigation and drip irrigation may be used. For example, both types of irrigation may be used at the same time. In other embodiments, different types of irrigation may be used at different times, for example at different growth stages of the *Sphagnum.*

Preferably the irrigation (e.g. controllable irrigation) is spray irrigation.

The method (and thus irrigation, e.g. controllable irrigation) may be carried out for a period of at least 12 or 24 hours. The method (and thus irrigation, e.g. controllable irrigation) may also be carried out for a period of at least 1, 2 or 3 days. In one embodiment the method (and thus irrigation, e.g. controllable irrigation) is carried out for a period of at least 1, 2 or 3 weeks. In another embodiment the method (and thus irrigation, e.g. controllable irrigation) is carried out for a period of at least 1, 2, 3, 4, 5 or preferably at least 6 months. In another embodiment the method (and thus irrigation, e.g. controllable irrigation) is carried out for a period of at least 1, 2, 3, 4, or 5 years. In one embodiment during said period the irrigation does not comprise saturating a surface on which *Sphagnum* is growing (e.g. field) with the nutrient composition/water to submerge at least a portion of the *Sphagnum* therewith. In one embodiment during said period the irrigation does not change the level of the water table. The skilled person will understand that when carrying out the irrigation for the stated period it is not necessary that the nutrient composition/water is being applied to the *Sphagnum* and/or a surface on which *Sphagnum* is growing (e.g. field) continually during said period. In fact, it is advantageous that this is not the case in order to control the amount of irrigation and reduce the nutrient composition/water wastage.

In one embodiment, a nutrient composition may be applied a surface on which *Sphagnum* is growing, such as a surface of a field (e.g. a surface of the field below or adjacent to the *Sphagnum).* In such embodiments, an irrigation system may be arranged to apply the nutrient composition to a surface on which *Sphagnum* is growing, such as a surface of a field (e.g. only to the surface of the field). The water may then be absorbed by the *Sphagnum,* e.g. by capillary action.

In one preferred embodiment a nutrient composition may be applied (directly) to a surface of *Sphagnum,* e.g. a surface-exposed region of *Sphagnum.* Thus, an irrigation system may be arranged to apply the nutrient composition to a surface of *Sphagnum.* Preferably a method of the invention comprises applying a nutrient composition only to a surface of the *Sphagnum.* The inventors have found that by applying the nutrient composition to a surface of the *Sphagnum,* optimum irrigation can be achieved. Advantageously, nutrient composition uptake by the *Sphagnum* is improved as there is a reduced reliance upon capillary action. Thus, the nutrient composition/water can be saved by preventing waste, while sufficient the nutrient composition/water can be applied to facilitate optimal growth.

In a particularly preferred embodiment the invention comprises applying a nutrient composition to a growing portion of *Sphagnum.*

The term "growing portion" as used herein in reference to *Sphagnum* refers to any portion of *Sphagnum* that is capable of growth. In one embodiment a "growing portion" of *Sphagnum* may be evident by comparison to another "non-growing portion" of *Sphagnum.* The "growing portion" is preferably a portion that is capable of actively photosynthesising, e.g. photosynthesising at the time that the method (and/or controllable irrigation thereof) takes place. Preferably, the growing portion is an actively photosynthesising portion of the *Sphagnum.* In one embodiment a "growing portion" of *Sphagnum* may be determined by the presence of chlorophyll (compared to a non-growing portion in which chlorophyll may be absent or substantially absent). Thus, in one embodiment a "growing portion" may be green due to present/high concentrations of chlorophyll, while a "non-growing portion" may be white or brown due to absent/low concentrations of chlorophyll. In one embodiment, a growing portion may comprise (or consist of) a light-exposed portion of *Sphagnum.* In one embodiment the growing portion is the uppermost part of each strand of *Sphagnum,* e.g. comprises the apex of the *Sphagnum.* In some embodiments, the growing portion comprises (or consist of) a portion that is up to 10 or 15 cm from the end (e.g. uppermost part in normal growth) of each strand of *Sphagnum.* Preferably the growing portion comprises (or consist of) a portion that is up to 5 cm from the end (e.g. uppermost part in normal growth) of each strand of *Sphagnum.*

It is to be understood that applying a nutrient composition to the growing portion of the *Sphagnum* includes where the growing portion is not actually growing at the time of application. For example, at night the growing portion may not be photosynthesising. In this case, the method may be carried out in accordance with the invention where the *Sphagnum* may be irrigated at night and the *Sphagnum* is not photosynthesising at the same time. However, over the duration in which the method is performed, at some points the growing portion is actively photosynthesising, such as in between irrigation phases.

In one embodiment a "growing portion" of *Sphagnum* is a visible surface of the *Sphagnum.* In such embodiments the method the irrigation (e.g. controllable irrigation) comprises applying nutrient composition to the visible surface of the *Sphagnum.*

In a preferred embodiment a growing portion of *Sphagnum* comprises a portion where new shoots or branches are budding/growing. Said portion may be adjacent to the capitula. In one embodiment a growing portion may comprise (or consist of) the capitula of the *Sphagnum* and a portion where new shoots or branches are budding/growing. In such embodiments the irrigation (e.g. controllable irrigation) comprises applying nutrient composition to the capitula of the *Sphagnum* and to a portion adjacent thereto (e.g. a portion where new shoots or branches are budding/growing).

Preferably, the growing portion comprises capitula of the *Sphagnum.* More preferably, the growing portion consists of capitula of the *Sphagnum.* Most preferably, the growing portion is the capitula of the *Sphagnum.* In such embodiments the irrigation comprises applying nutrient composition to the capitula of the *Sphagnum.*

In one embodiment capitula are clusters of young branches present at the top of the *Sphagnum* plants in normal growth.

By applying water directly to the growing portion of the *Sphagnum,* nutrient composition can be provided where it is required by the *Sphagnum,* rather than relying on capillary action.

In some embodiments, the irrigation comprises applying nutrient composition to the growing portion of the *Sphagnum* to hydrate the growing portion of the *Sphagnum.* As used herein, "hydrate" may mean to apply sufficient nutrient composition to promote growth, for example for optimum growth. That is, enough nutrient composition is applied to the *Sphagnum* to allow growth and prevent the *Sphagnum* drying out. Preferably, the growing portion is prevented from drying out. More preferably, the capitulum is prevented from drying out.

In some embodiments, the method or irrigating ensures that at least a portion of the surface of the *Sphagnum* remains in contact with air in order to permit gaseous exchange. For example the method or irrigating may ensure that at least 40%, 50%, 60%, 70% or 80% of a surface area of *Sphagnum* remains in contact with air in order to permit gaseous exchange (preferably at least 90% or 95%). In some embodiments, the irrigating ensures that at least a portion of a surface of the growing portion of the *Sphagnum* remains in contact with air in order to permit gaseous exchange. In some embodiments, the irrigation comprises applying nutrient composition to the growing portion of the *Sphagnum* such that at least a part of a surface of the growing portion of the *Sphagnum* remains in contact with air to promote gaseous exchange. For example the method or irrigating may ensure that at least 40%, 50%, 60%, 70% or 80% of a surface area of the growing portion of *Sphagnum* remains in contact with air in order to permit gaseous exchange (preferably at least 90% or 95%, most preferably 100%). For example, at least 10% of the surface of the growing portion remains in contact with air, preferably at least 20%, more preferably at least 30%, yet more preferably at least 40%, most preferably at least 50%. Enabling contact with air permits optimal gas exchange for growth. Thus in one embodiment, nutrient composition is applied such that the entire surface of the growing portion of the *Sphagnum* is not covered with nutrient composition which would reduce gaseous exchange. In other words, the growing portion may not be submerged in nutrient composition. In some examples, providing at least part of the surface in contact with air does not encompass situations where contact with air is removed naturally, such as in sudden flooding.

In some embodiments, spaces between the *Sphagnum* or within the *Sphagnum* are at least partially filled with air. Preferably, the irrigation does not expel all of this air such that not all of the spaces are filled with water. In contrast, in paludiculture techniques where the *Sphagnum* is submerged, the spaces are often filled with water. Therefore, preferably "a surface of the growing portion of the *Sphagnum* remains in contact with air" means that the *Sphagnum* is not submerged with nutrient composition.

Preferably, the irrigation comprises applying nutrient composition to the growing portion of the *Sphagnum* to hydrate the growing portion of the *Sphagnum* and such that at least a part of a surface of the growing portion of the *Sphagnum* remains in contact with air to promote gaseous exchange. This provides an optimum amount of nutrient composition to cultivate the *Sphagnum.*

In some embodiments, the irrigating partially saturates the *Sphagnum* with nutrient composition. Preferably, the irrigation comprises applying nutrient composition up to a point at which the *Sphagnum* is saturated with nutrient composition but not applying additional nutrient composition beyond the amount required to reach the point of saturation (e.g. not oversaturating the *Sphagnum*). In some embodiments, the irrigating maintains partial saturation of the *Sphagnum* with nutrient composition for a defined period, e.g. for at least 1 day, 1 week, 1 month, 6 months, 1 year, 5 years or more. As used herein "partial saturation" refers to less than full saturation (i.e. 100% saturation). In some embodiments, partial saturation is less than 100% saturation, preferably less than 90% saturation, more preferably less than 80% saturation, still more preferably less than 70% saturation, even still more preferably less than 60% saturation, and yet even still more preferably less than 50% saturation. Saturation, or full saturation, is a state where the *Sphagnum* can hold no more nutrient composition. That is, spaces between surfaces of the *Sphagnum* or within the layers of *Sphagnum* are substantially filled with nutrient composition. Saturation can be observed when nutrient composition run-off occurs when water is applied. Run-off occurs where nutrient composition can no longer be absorbed by the *Sphagnum* (due to the *Sphagnum* being fully saturated), and results in nutrient composition running off the *Sphagnum,* for example. By supplying nutrient composition to run-off, saturation of the *Sphagnum* can be determined. As a result, partial saturation can be achieved by stopping supplying the nutrient composition before run-off occurs. In one embodiment the irrigating comprises providing sufficient nutrient composition to the *Sphagnum* such there is little or no run-off. In one embodiment, the irrigating comprises stopping application of nutrient composition to the surface of the *Sphagnum* once surface run-off of the nutrient composition is observed and/or wherein the irrigating comprises stopping application of water to a surface on which *Sphagnum* is growing once saturation of the surface with nutrient composition is observed.

Preferably, the term "partial saturation" means the *Sphagnum* is not saturated with nutrient composition to a point where it cannot absorb any additional nutrient composition. Rather, it means that the *Sphagnum* could hold additional nutrient composition. However, it has been found to be beneficial to avoid saturation and provide a level of nutrient composition content below saturation. It is therefore preferable that there is no excess nutrient composition within the *Sphagnum* that cannot be absorbed, and in particular at the growing portion, as this reduces gaseous exchange.

In one embodiment, the irrigating comprises applying nutrient composition to the *Sphagnum* such that a ratio of a weight of nutrient composition to a dry weight of the *Sphagnum* is less than about 60. For example, this corresponds to 60 g of nutrient composition per 1 g dry weight of *Sphagnum,* for example after harvesting.

It has been found that a ratio of a weight of nutrient composition to a dry weight of the *Sphagnum* of above about 60 causes the *Sphagnum* to be saturated. It has been found that a ratio of a weight of nutrient composition to a dry weight of the *Sphagnum* of above about 45 is sufficient to substantially saturate the *Sphagnum.* In one embodiment, the irrigating comprises applying nutrient composition to the *Sphagnum* such that a ratio of a weight of nutrient composition to a dry weight of the *Sphagnum* is less than about 60, preferably less than 43.80.

It is therefore preferable to keep the ratio of the weight of nutrient composition to the dry weight below about 60 to prevent saturation, preferably less than about 45, more preferably less than 43.80, still more preferably less than about 40, even still more preferably less than about 35, and most preferably less than about 30. Above a ratio of about 35, the nutrient composition content leads to a reduction in the surface of the *Sphagnum* in contact with air and may reduce the gas exchange in the *Sphagnum.*

It has also been found that a ratio of a weight of nutrient composition to a dry weight of the *Sphagnum* of less than about 5 may cause the *Sphagnum* to at least partially dry out. It is preferable to keep the ratio above 5 to cultivate the *Sphagnum.* Alternatively or additionally, the irrigation comprises applying nutrient composition to the *Sphagnum* such that a ratio of a weight of nutrient composition to a dry weight of the *Sphagnum* is more than about 5, preferably more than about 7, more preferably more than about 8, still more preferably more than about 10, most preferably more than about 12.

The ratio of a weight of nutrient composition to a dry weight of the *Sphagnum* may be between about 5 and 60, preferably between about 8 and 45, more preferably between about 10 and 40, still more preferably between about 12 and 35. In one embodiment, the irrigation comprises applying nutrient composition to the *Sphagnum* such that a ratio of a weight of nutrient composition to a dry weight of the *Sphagnum* is between about 5 and about 60. In a preferred embodiment, the irrigation comprises applying nutrient composition to the *Sphagnum* such that a ratio of a weight of nutrient composition to a dry weight of the *Sphagnum* is between about 8 and about 45. In a most preferred embodiment, the irrigation comprises applying nutrient composition to the *Sphagnum* such that a ratio of a weight of nutrient composition to a dry weight of the *Sphagnum* is between about 12 and about 35.

In some embodiments, the ratio of a weight of nutrient composition held in the growing portion of the *Sphagnum* to a dry weight of the growing portion is between about 5 and 60, preferably between about 8 and 45, more preferably between about 10 and 40, still more preferably between about 12 and 35. In a preferred embodiment, the ratio of a weight of nutrient composition held in the capitula of the *Sphagnum* to a dry weight of the capitula is between about 5 and 60, preferably between about 8 and 45, more preferably between about 10 and 40, still more preferably between about 12 and 35.

Advantageously, irrigation comprising partial saturation of the *Sphagnum* in accordance with the invention is more economical as it requires less nutrient composition and/or is more efficient and/or has been found by the inventors to improve growth of the *Sphagnum.* Without wishing to be bound by theory, the inventors believe that by exposing *Sphagnum* to the air rather than submerging it with water/ nutrient composition (as per conventional paludiculture techniques) gaseous exchange can be improved, meaning that growth rates can be improved.

In one embodiment the irrigation comprises applying nutrient composition such that the weight of nutrient composition to the volume of *Sphagnum* is maintained at at least 150 g/L, 200 g/L, 250 g/L, 300 g/L, 350 g/L, 400 g/L or 450 g/L, preferably at least 250 g/L. Alternatively or additionally, the irrigation comprises applying nutrient composition such that the weight of nutrient composition to the volume of *Sphagnum* is maintained at 500 g/L or less, 450 g/L or less, 400 g/L or less, 350 g/L or less, 300 g/L or less, 250 g/L or less or 200 g/L or less, preferably 400 g/L or less.

The *Sphagnum* may be saturated by applying nutrient composition such that the weight of nutrient composition to the volume of *Sphagnum* is maintained at between about 150 g/L to 500 g/L. This means that every litre of *Sphagnum* growing will contain between about 150 g to 500 g of nutrient composition.

In one embodiment *Sphagnum* may be saturated by applying nutrient composition such that the weight of nutrient composition to the volume of *Sphagnum* is maintained at between about 250 g/L to 400 g/L, preferably at between about 300 g/L to 360 g/L, more preferably about 330 g/L.

The controllable irrigation may be controlled based on an environmental parameter. For example, the environmental parameter may include temperature, precipitation, humidity, wind speed, or other weather condition. In some embodiments, said environmental parameters will likely effect whether or not the *Sphagnum* is saturated with nutrient composition. Preferably, irrigation is controlled based on evaporation of water/nutrient composition from the *Sphagnum* and/or the surface on which the *Sphagnum* is present. In such embodiments the controllable irrigation may comprise the use of a sensor that measures the environmental parameter and adjusts an irrigation parameter accordingly.

In one embodiment, the methods of the invention comprise the use of a sensor that measures evaporation of water/nutrient composition. In one embodiment, an irrigation parameter is altered when the evaporation of the water/nutrient composition is sensed. Preferably, when the evaporation of water/nutrient composition exceeds a pre-set threshold level, an irrigation parameter is altered (e.g. the amount of nutrient composition applied is increased and/or the rate at which nutrient composition is applied is increased and/or the irrigation time is increased and/or the frequency of irrigation is increased).

The irrigation system may comprise a processor configured to receive data from a sensor measuring an environmental parameter, thereby allowing control of irrigation based on feedback from the sensor. For example, if a rainfall sensor has measured levels of rainfall that exceed a pre-set threshold level, then it may automatically trigger the irrigation system to reduce the amount of irrigation. In another example, if a temperature sensor has measured temperatures that exceed a pre-set threshold level, then it may automatically trigger the irrigation system to increase the amount of irrigation.

Alternatively or additionally, the controllable irrigation system may receive data over a network such as the internet to obtain rainfall or other weather data, and use this data to control the irrigation instead of using a particular sensor.

In some embodiments, the irrigation may be controlled based on user input. For example, a user may change the amount of irrigation based on recent heavy rainfall, or recent drought. Any of the examples disclosed herein may be performed manually by a user instead of automatically e.g. using sensors.

Advantageously, the present invention allows for the control of the amount of irrigation on a short-term basis, which is not possible using paludiculture techniques and/or those conventional techniques where the water table is raised.

In one embodiment, the methods of the invention also comprise covering the *Sphagnum.* The *Sphagnum* may be covered with any suitable material. A cover can reduce water loss by evaporation and enhance growth by protecting the *Sphagnum* from the wind and retaining warmth. A cover can therefore provide a microclimate for the *Sphagnum.* In some embodiments the covering material may be a mesh cover, a plastic cover or a straw cover. Advantageously, growth of *Sphagnum* has been shown to be improved by employing the use of such a cover. Preferably the cover is a mesh cover. More preferably a woven mesh cover is applied to the *Sphagnum.* More preferably the method comprises controllably irrigating mesh covered *Sphagnum* using spray irrigation.

In a preferred embodiment, a woven mesh cover is applied over the *Sphagnum.* A mesh allows sufficient light to the *Sphagnum* for growth. The mesh is long-lasting compared to straw and is potentially re-usable. The mesh also prevents weed seeds from blowing in and contaminating the *Sphagnum.* Differently to most plants, *Sphagnum* has been found to thrive in a high humidity environment, where providing a cover retains the high humidity which is advantageous. If the cover is perforated, porous, or woven, then water is allowed to be transmitted through the cover, and overhead irrigation e.g. spray irrigation can be suitable.

In one embodiment a method of the invention further comprises harvesting the *Sphagnum.* The method of the invention provides a sustainable method of growing *Sphagnum* in contrast to conventional *Sphagnum* harvesting methods from the 'wild' that damage environments such as peatlands. A fully-grown carpet of *Sphagnum* can be lifted and harvested. On a large scale, a forage or silage harvester may be used to lift the carpet or mat of *Sphagnum,* chop the *Sphagnum,* and load it. In contrast, in conventional paludiculture techniques, a long-reach excavator fitted with a cutter must be used with access only from the banks. This is very expensive, and is made more difficult by erosion of the banks. Furthermore, partial harvest is difficult and re-establishment is poor with increased weed contamination.

As the *Sphagnum* may be irrigated, the irrigation can be stopped and the *Sphagnum* can be allowed to dry. The biomass can be dried on site, similar to leaving hay to dry in the summer. This reduces drying costs. The weight of dry *Sphagnum* can be as low as 7 kg m⁻³ by this method. The harvested *Sphagnum* has a low moisture content which allows for easier chopping and provides a very light product for transport. This is not possible in conventional *Sphagnum* farming where the water table is raised. The harvested wet *Sphagnum* in conventional *Sphagnum* farming provides a heavy product which is difficult and costly to chop, dry and transport.

After harvest, the area of the field can be re-applied with *Sphagnum,* for regeneration and another harvest cycle.

In some embodiments the harvested *Sphagnum* may be applied (e.g. transplanted) to a secondary location, for example planted to a secondary location. The secondary location may be area for restoration, for example a peatland or an agricultural site.

In some embodiments, the methods of the invention further comprise providing a growing medium comprising the harvested *Sphagnum.* For example, the growing medium may be an agricultural growing medium used as a replacement for compost (e.g. peat-based compost). It is desirable to use *Sphagnum* as a replacement for peat in growing media, as harvesting peat leads to degradation of peatlands as described herein. As peat is a common component of conventional growing media, replacing this with *Sphagnum* that can be grown sustainably is beneficial. By growing *Sphagnum* on a field, a sustainable production of *Sphagnum* can be achieved without causing considerable damage to peatlands through translocation, and can even allow for multiple harvests. Furthermore, as peat is simply decomposed *Sphagnum, Sphagnum* itself has many similar and beneficial properties for a component of a growing media as peat. In some examples, a growing medium may comprise *Sphagnum* in combination with peat.

The invention may further comprise supplying the *Sphagnum* with water, e.g. by irrigation. Thus, all of the embodiments related to supplying nutrient composition herein (e.g. by irrigation) and the discussion thereof are also applicable to the supply of water.

Aspects of the invention may be provided in conjunction with each other and features of one aspect may be applied to other aspects. Any feature in one aspect of the invention may be applied to other aspects of the invention, in any appropriate combination. It should also be appreciated that particular combinations of the various features described and defined in any aspects of the invention can be implemented and/or supplied and/or used independently. Embodiments related to the method may be applied to the nutrient composition, *Sphagnum* obtainable by the method, use, and *vice versa.*

Unless defined otherwise, all technical and scientific terms used herein have the same meaning as commonly understood by one of ordinary skill in the art to which this disclosure belongs.

The headings provided herein are not limitations of the various aspects or embodiments of this disclosure.

Other definitions of terms may appear throughout the specification. Before the exemplary embodiments are described in more detail, it is to be understood that this disclosure is not limited to particular embodiments described, and as such may vary. It is also to be understood that the terminology used herein is for the purpose of describing particular embodiments only, and is not intended to be limiting, since the scope of the present disclosure will be defined only by the appended claims.

Where a range of values is provided, it is understood that each intervening value, to the tenth of the unit of the lower limit unless the context clearly dictates otherwise, between the upper and lower limits of that range is also specifically disclosed. Each smaller range between any stated value or intervening value in a stated range and any other stated or intervening value in that stated range is encompassed within this disclosure. The upper and lower limits of these smaller ranges may independently be included or excluded in the range, and each range where either, neither or both limits are included in the smaller ranges is also encompassed within this disclosure, subject to any specifically excluded limit in the stated range. Where the stated range includes one or both of the limits, ranges excluding either or both of those included limits are also included in this disclosure.

It must be noted that as used herein and in the appended claims, the singular forms "a", "an", and "the" include plural referents unless the context clearly dictates otherwise. Thus, for example, reference to "a nutrient" includes a plurality of such nutrients and reference to "the nutrient" includes reference to one or more growth media and equivalents thereof known to those skilled in the art, and so forth.

The publications discussed herein are provided solely for their disclosure prior to the filing date of the present application. Nothing herein is to be construed as an admission that such publications constitute prior art to the claims appended hereto.

### DESCRIPTION OF THE DRAWINGS

Embodiments of the invention will now be described, by way of example only, with reference to the following Figures and Examples.
**Figure 1** shows a range of different nutrient compositions and the various nutrients and compositions present in those compositions as applied during the method of the invention. All units are mg/L of composition used for irrigation.
**Figure 2** shows preferred nutrient ranges (mg/L) and application rates (mg/m²/day) for growing *Sphagnum.*
**Figure 3** shows growth of *S*. *capillifolium* in the presence of the nutrient compositions of Figure 1.
**Figure 4** shows growth of *S*. *squarrosum* in the presence of the nutrient compositions of Figure 1.
**Figure 5** shows growth of *S. palustre* in the presence of the nutrient compositions of Figure 1.
**Figure 6** shows productivity (in m³ ha⁻¹ a⁻¹) of *Sphagnum* grown in a greenhouse with nutrients applied in accordance with the present invention across different species of *Sphagnum.*
**Figure 7** shows a table of measured strand lengths of *Sphagnum* after 6 months of growth.

### EXAMPLES

### EXAMPLE 1

### Materials & Methods

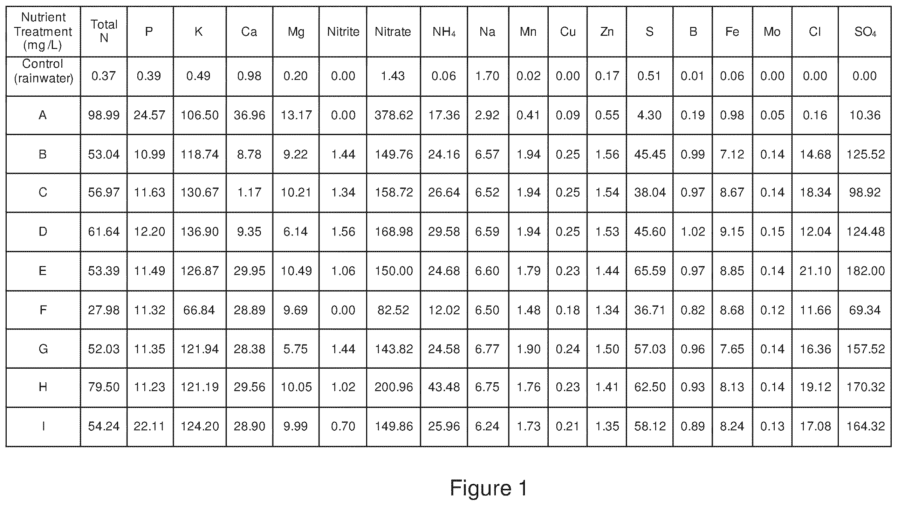

A trial commenced 2018 week 10 (6th March 2018) using BeadaGel^{™} "Fast Start", commercially available from BeadaMoss^{®}, UK, at 3L/*m²* which was spread on plug trays in a glasshouse at a minimum temperature of 5 °C and ventilated at 20 °C with overhead irrigation at 2.6 L of water per m² whenever the surface of the *Sphagnum* appeared dry. Six plug trays were used per treatment regime; each tray containing a different *Sphagnum* species: *S. capillifolium (SA), S. fallax (SF), S. magellanicum (SM), S. papillosum (SP), S. squarrosum (SQ)* and *S. palustre (SS).* Growing media was horticultural peat, apart from one of the treatments using soil. A chemical analysis of each treatment (i.e. the amount of nutrient present in mg per L of composition applied) is given in Figure 1. It is noted that the total nitrogen content (Total N) is shown which represents a total nitrogen contents of the Nitrite, Nitrate, and NH₄ (ammonium) as shown, which can be calculated based on molecular weights. Similarly, sulfur (S) and sulfate (SO₄) are both displayed, but as will be appreciated the sulfur represents the sulfur content of the sulfate content, rather than being present in addition to the sulfate value.

The treatment CON was rainwater with no added nutrients, and provides a comparison to the other nutrient treatments. The analysis in Figure 1 shows that rainwater has low levels of nutrients, or even none in some cases.

Nutrient solutions were applied three times each week (Monday, Wednesday and Friday). Application was via a watering can from overhead of approximately 4 litres for each treatment group (i.e. 4 L per m²), 200 ml stock solution per 4 litres.

Trays were placed in the same species order in the experimental greenhouse. Sample positions within the greenhouse were changed to equalize light and watering over the period of the trial, keeping species within their nutrient-regime groups. After approximately six months, the full tray was photographed to assess plug success rate and estimate percentage cover. Three plugs from each tray were harvested *in situ* over a period of four weeks, and weighed over a period of seven days with a 4 d.p. balance to obtain fresh weight. Samples were placed in paper bags and dried in the same drying oven for a period of 20 hours at 80°C. Data for plug weight and percentage cover across the trays were combined to produce more representative growth data across the trial, and qualitative observations were noted. Data analysis was through Excel and SPSS. Data was analysed using Microsoft Excel and IBM SPSS Statistics 25. Treatment differences were investigated using Kruskal-Wallis tests.

### Results

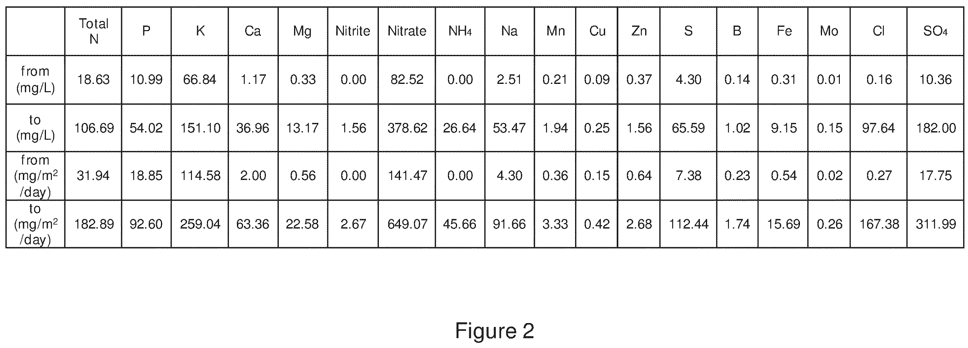

Figure 2 shows the preferred ranges of nutrients (in mg per L) present in nutrient compositions for growth of *Sphagnum* (i.e. in which at least 3 species grew well). Based on these preferred nutrient ranges, preferred application amounts (e.g. /area/day, more specifically in mg per m² per day) were calculated and presented in Figure 2.

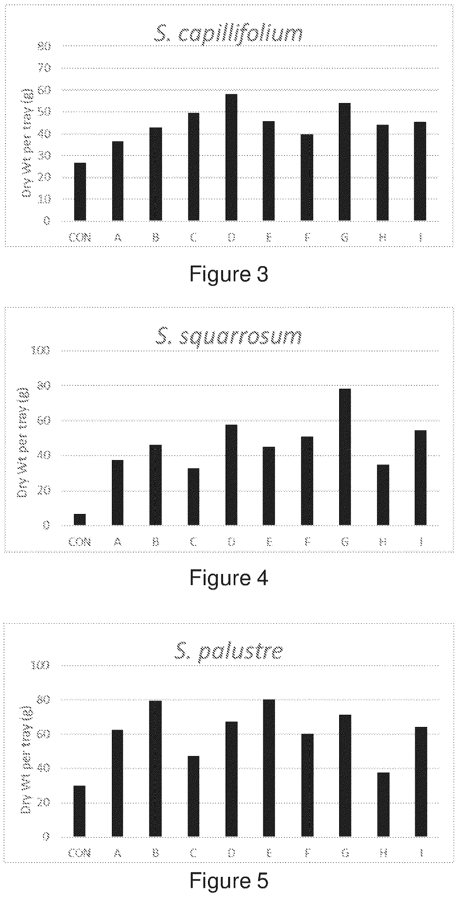

Figures 3-5 show growth in the presence of the various nutrient compositions. Surprisingly, *Sphagnum* responded well to growth under high nutrient concentrations contrary to conventional theory in the art. Treatment CON (control of rainwater) was the least successful across all species.

Growth was also tested in 2 further nutrient compositions, J and K. Nutrient concentrations in mg/L are shown below:

| **Nutrient Treatment** | **Na** | **Mg** | **K** | **Ca** | **Mn** | **Cu** | **Zn** | **Sulphate** | **Nitrate** |
|---|---|---|---|---|---|---|---|---|---|
| **J** | 2.51 | 0.33 | 82.47 | 1.21 | 0.21 | 0.11 | 0.37 | 46.43 | 175.42 |
| **K** | 53.47 | 16.10 | 151.10 | 19.24 | 1.02 | 0.15 | 0.49 | 98.97 | 263.77 |

| **Nutrient Treatment** | **S** | **B** | **P** | **Fe** | **Mo** | **Chloride** | **Nitrite** | **Ammonium** | |
|---|---|---|---|---|---|---|---|---|---|
| **J** | 16.76 | 0.14 | 54.02 | 0.31 | 0.01 | 13.48 | 0.31 | 0.00 | |
| **K** | 35.70 | 0.34 | 26.63 | 1.71 | 0.09 | 97.64 | 0.00 | 11.13 | |

At least 3 species grew well with in these nutrient compositions, hence, they were taken into account for forming the preferred nutrient ranges and application rates presented in Figure 2, *see* Table below (mean dry weight is per plug in grams).

| ***S. capillifolium*** | **Mean Dry Wt (g)** | ***S. palustre*** | **Mean Dry Wt (g)** | ***S. squarrosum*** | **Mean Dry Wt (g)** |
|---|---|---|---|---|---|
| **J** | 0.51 | **J** | 1.04 | **J** | 1.76 |
| **K** | 0.79 | **K** | 0.63 | **K** | 1.28 |
| **Control (rainwater)** | 0.43 | **Control (rainwater)** | 0.46 | **Control (rainwater)** | 0.51 |

### EXAMPLE 2

### Materials & Methods

A trial was set up by applying BeadaGel^{™} "Fast Start" at 3L/*m²* which was spread on plug trays in a glasshouse at a minimum temperature of 5 °C and ventilated at 20 °C with overhead irrigation at 2.6 L of water per m² whenever the surface of the *Sphagnum* appeared *dry. Sphagnum* was cultivated in accordance with a method of the present invention. Six species were used: *Sphagnum capillifolium, Sphagnum fallax, Sphagnum magellanicum, Sphagnum papillosum, Sphagnum squarrosum,* and *Sphagnum palustre.* The *Sphagnum* was irrigated with a nutrient composition comprising Treatment A, with the nutrient components shown in Figure 1. This gave a final nutrient content comprising: 2.92 mg/L of sodium, 13.17 mg/L of magnesium, 106.50 mg/L of potassium, 36.96 mg/L of calcium, 0.41 mg/L of manganese, 0.09 mg/L of copper, 0.55 mg/L of zinc, 4.30 mg/L of sulfur, 0.19 mg/L of boron, 24.57 mg/L of phosphorus, 0.98 mg/L of iron, 0.05 mg/L of molybdenum, 0.16 mg/L of chloride, 0.00 mg/L of nitrite, 10.36 mg/L of sulphate, 378.62 mg/L of nitrate, and 17.36 mg/L of ammonium, with a total nitrogen content of 98.99 mg/L. The *Sphagnum* was irrigated with 4 L of the nutrient composition per m² three times per week, providing 12 L per m² per week.

Growth was carried out for a period of 12 months before harvesting. Once harvested, volume was assessed by using the Growing Media industry standard method: BS EN 12579:2000 "Soil Improvers and Growing Media".

### Results

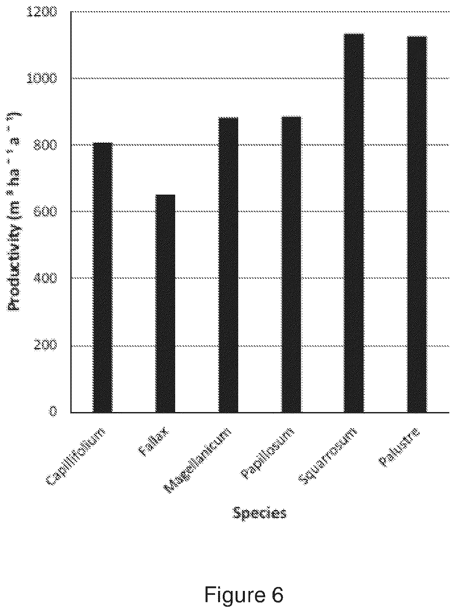

Figure 6 shows *Sphagnum* grown in accordance with the present invention demonstrated productivity levels of at least 600 m³ ha⁻¹ a⁻¹, and consistent productivity across the different species. *Sphagnum palustre* and *Sphagnum squarrosum* achieved particularly good growth, providing productivities of around 1100 m³ ha⁻¹ a⁻¹. A dry weight bulk density was measured and provided a value of 9-14 kg m⁻³.

Consistent and high productivity across each trial demonstrates the success of Treatment A across the different species of *Sphagnum.*

### EXAMPLE 3

### Materials & Methods

A trial was conducted using *Sphagnum palustre* applied to a peat substrate in a greenhouse under controlled environmental conditions. The temperature was maintained with a minimum of 14 °C for 3 months, followed by 20 °C for 3 months. Nutrient was applied as the only water supply (i.e. not subject to further irrigation of water without nutrient). The *Sphagnum* was irrigated with a nutrient composition comprising Treatment A, with the nutrient components shown in Figure 1. This gave a final nutrient content comprising: 2.92 mg/L of sodium, 13.17 mg/L of magnesium, 106.50 mg/L of potassium, 36.96 mg/L of calcium, 0.41 mg/L of manganese, 0.09 mg/L of copper, 0.55 mg/L of zinc, 4.30 mg/L of sulfur, 0.19 mg/L of boron, 24.57 mg/L of phosphorus, 0.98 mg/L of iron, 0.05 mg/L of molybdenum, 0.16 mg/L of chloride, 0.00 mg/L of nitrite, 10.36 mg/L of sulphate, 378.62 mg/L of nitrate, and 17.36 mg/L of ammonium, with a total nitrogen content of 98.99 mg/L. The *Sphagnum* was irrigated with 3.75 L of the nutrient composition per m² three times per week, providing 11.25 L per m² per week. This gave a nutrient application rate comprising: 32.86 mg/m²/week of sodium, 148.16 mg/m²/week of magnesium, 1198.13 mg/m²/week of potassium, 415.80 mg/m²/week of calcium, 4.60 mg/m²/week of manganese, 0.97 mg/m²/week of copper, 6.20 mg/m²/week of zinc, 48.42 mg/m²/week of sulfur, 2.18 mg/m²/week of boron, 276.41 mg/m²/week of phosphorus, 11.02 mg/m²/week of iron, 0.60 mg/m²/week of molybdenum, 1.80 mg/m²/week of chloride, 0.00 mg/m²/week of nitrite, 116.51 mg/m²/week of sulphate, 4259.51 mg/m²/week of nitrate, and 195.26 mg/m²/week of ammonium, with a total nitrogen content of 1113.69 mg/m²/week. The *Sphagnum* was harvested after 6 months. Ten strands were removed for measurement in each sample, and three replicate samples were taken.

### Results

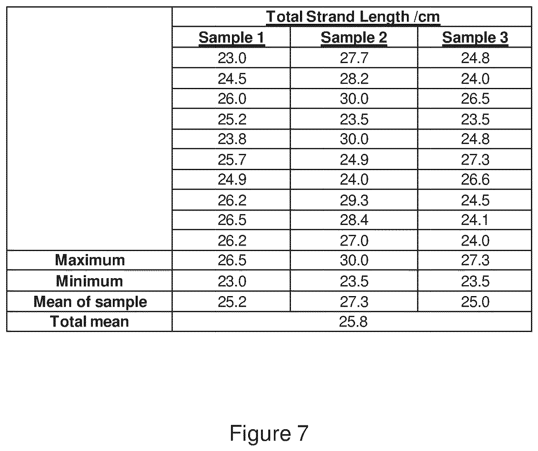

Figure 7 shows a table of measured strand lengths in cm. The average across each replicate shows that the average strand length after 6 months growth is 25.8 cm.

All publications mentioned in the above specification are herein incorporated by reference. Various modifications and variations of the described methods and system of the present invention will be apparent to those skilled in the art without departing from the scope and spirit of the present invention. Although the present invention has been described in connection with specific preferred embodiments, it should be understood that the invention as claimed should not be unduly limited to such specific embodiments. Indeed, various modifications of the described modes for carrying out the invention which are obvious to those skilled in agriculture, horticulture, and plant technology or related fields are intended to be within the scope of the following claims.

The disclosure of this application also contains the following numbered clauses:
1. A method for cultivating Sphagnum, the method comprising supplying the Sphagnum with a nutrient composition, the nutrient composition comprising nitrogen, phosphorus, and/or potassium.
2. The method according to clause 1, wherein the nutrient composition is supplied at an amount comprising at least 223.61 mg of nitrogen per m 2 per week.
3. The method according to clause 1 or 2, wherein the nutrient composition is supplied at an amount comprising between 223.61 mg and 1280.25 mg of nitrogen per m 2 per week.
4. The method according to any one of the preceding clauses, wherein the nutrient composition is supplied at an amount comprising at least 209.64 mg of nitrogen per m 2 per week.
5. The method according to any one of the preceding clauses, wherein the nutrient composition is supplied at an amount comprising at least 400 mg of nitrogen per m 2 per week.
6. The method according to any one of the preceding clauses, wherein the nutrient composition is supplied at an amount comprising at least 800 mg of nitrogen per m 2 per week.
7. The method according to any one of the preceding clauses, wherein the nutrient composition is supplied at an amount comprising at least 131.93 mg of phosphorous per m 2 per week.
8. The method according to any one of the preceding clauses, wherein the nutrient composition is supplied at an amount comprising between 131.93 mg and 648.18 mg of phosphorous per m 2 per week.
9. The method according to any one of the preceding clauses, wherein the nutrient composition is supplied at an amount comprising at least 123.68 mg of phosphorous per m 2 per week.
10. The method according to any one of the preceding clauses, wherein the nutrient composition is supplied at an amount comprising at least 150 mg of phosphorous per m 2 per week.
11. The method according to any one of the preceding clauses, wherein the nutrient composition is supplied at an amount comprising at least 225 mg of phosphorous per m 2 per week.
12. The method according to any one of the preceding clauses, wherein the nutrient composition is supplied at an amount comprising at least 802.09 mg of potassium per m 2 per week.
13. The method according to any one of the preceding clauses, wherein the nutrient composition is supplied at an amount comprising between 802.09 mg and 1813.26 mg of potassium per m 2 per week.
14. The method according to any one of the preceding clauses, wherein the nutrient composition is supplied at an amount comprising at least 751.96 mg of potassium per m 2 per week.
15. The method according to any one of the preceding clauses, wherein the nutrient composition is supplied at an amount comprising at least 800 mg of potassium per m 2 per week.
16. The method according to any one of the preceding clauses, wherein the nutrient composition is supplied at an amount comprising at least 1000 mg of potassium per m 2 per week.
17. The method according to any one of the preceding clauses, wherein the nutrient composition is supplied at an amount comprising:
   at least 223.61 mg of nitrogen per m 2 per week;
   at least 131.93 mg of phosphorous per m 2 per week; and
   at least 802.09 mg of potassium per m 2 per week.
18. The method according to any one of the preceding clauses, wherein the nutrient composition is supplied at an amount comprising: between 223.61 mg and 1280.25 g of nitrogen per m 2 per week;
   between 131.93 mg and 648.18 mg of phosphorous per m 2 per week; and
   between 802.09 mg and 1813.26 mg of potassium per m 2 per week.
19. The method according to any one of the preceding clauses, wherein the nutrient composition supplied in mg per m 2 per week is an average amount over a period of up to 1 month, preferably up to 3 months, more preferably up to 6 months, e.g. up to 9 months.
20. The method according to any one of the preceding clauses, wherein the nutrient composition is supplied at an amount comprising:
   at least 31.94 mg of nitrogen per m 2 per day;
   at least 18.85 mg of phosphorous per m 2 per day; and
   at least 114.58 mg of potassium per m 2 per day.
21. The method according to any one of the preceding clauses, wherein the nutrient composition is supplied at an amount comprising:
   between 31.94 mg and 182.89 mg of nitrogen per m 2 per day;
   between 18.85 mg and 92.60 mg of phosphorous per m 2 per day; and
   between 114.58 mg and 259.04 mg of potassium per m 2 per day.
22. The method according to any one of the preceding clauses, wherein the nutrient composition supplied in mg per m 2 per day is an average amount over a period of up to 1 week, preferably up to 1 month, more preferably up to 3 months, even more preferably up to 6 months, e.g. up to 9 months.
23. The method according to any one of the preceding clauses, wherein the nutrient composition is supplied in a ratio of nitrogen to phosphorous X:1 , wherein X is at least 2, and wherein a ratio of nitrogen to potassium is 1 :Y, wherein Y is at least 1.
24. The method according to any one of the preceding clauses, wherein the nutrient composition is supplied in a ratio of nitrogen to phosphorous X:1 , wherein X is at least 4, and wherein a ratio of nitrogen to potassium is 1 :Y, wherein Y is greater than 1.
25. The method according to any one of the preceding clauses, wherein the nutrient composition is supplied in a ratio of nitrogen to phosphorous X:1 , wherein X is between 2 and 15, and wherein a ratio of nitrogen to potassium is 1 : Y, wherein Y is at between 1 and 2.5.
26. The method according to any one of the preceding clauses, wherein the nutrient composition further comprises calcium.
27. The method according to clause 26, wherein the nutrient composition is supplied at an amount comprising at least 14.02 mg of calcium per m 2 per week.
28. The method according to any one of the preceding clauses, wherein the nutrient composition further comprises magnesium.
29. The method according to clause 28, wherein the nutrient composition is supplied at an amount comprising at least 3.94 mg of magnesium per m 2 per week.
30. The method according to any one of the preceding clauses, wherein the nutrient composition is supplied at between 5 and 15 L of nutrient composition per m 2 per week.
31. The method according to any one of the preceding clauses, wherein the nutrient composition comprises:
   a) at least 18.63 mg of nitrogen per L;
   b) at least 10.99 mg of phosphorous per L; and/or
   c) at least 66.84 mg of potassium per L.
32. The method according to any one of the preceding clauses, wherein the nutrient composition comprises:
   a) at least 175 mg of nitrogen per L;
   b) at least 60 mg of phosphorous per L; and/or
   c) at least 210 mg of potassium per L.
33. The method according to any one of the preceding clauses, wherein the nutrient composition further comprises calcium, and the nutrient composition comprises between 1.17 mg and 80 mg of calcium per L.
34. The method according to any one of the preceding clauses, wherein the nutrient composition further comprises sodium, copper, zinc, sulfur, boron, iron, molybdenum, and/or chloride.
35. The method according to any one of the preceding clauses, wherein the nutrient is supplied at an amount of:
   a) 18.85-92.60 mg/m 2 /day of phosphorus;
   b) 114.58-259.04 mg/m 2 /day of potassium;
   c) 0.56-22.58 mg/m 2 /day of magnesium;
   d) 2.00-63.36 mg/m 2 /day of calcium;
   e) 0.54-15.69 mg/m 2 /day of iron;
   f) 17.75-31 1.99 mg/m 2 /day of sulphate;
   g) 141.47-649.07 mg/m 2 /day of nitrate; and/or
   h) 0.01-45.66 mg/m 2 /day of ammonium.
36. The method according to any one of the preceding clauses, wherein the nutrient is supplied at an amount of:
   a) 18.85-92.60 mg/m 2 /day of phosphorus;
   b) 114.58-259.04 mg/m 2 /day of potassium;
   c) 0.56-22.58 mg/m 2 /day of magnesium;
   d) 2.00-63.36 mg/m 2 /day of calcium;
   e) 0.54-15.69 mg/m 2 /day of iron;
   f) 17.75-31 1.99 mg/m 2 /day of sulphate;
   g) 141.47-649.07 mg/m 2 /day of nitrate;
   h) 0.01-45.66 mg/m 2 /day of ammonium;
   i) 4.30-91.66 mg/m 2 /day sodium;
   j) 0.36-3.33 mg/m 2 /day manganese;
   k) 0.15-0.42 mg/m 2 /day copper;
   L) 0.64-2.68 mg/m 2 /day zinc;
   m) 7.38-1 12.44 mg/m 2 /day sulphur;
   n) 0.23-1.74 mg/m 2 /day boron;
   o) 0.02-0.26 mg/m 2 /day molybdenum;
   p) 0.27-167.38 mg/m 2 /day chloride; and/or
   q) 0.01-2.67 mg/m 2 /day nitrite.
37. The method according to any one of the preceding clauses, wherein the total nitrogen supplied is at an amount of 30.95-178.31 mg/m 2 /day.
38. The method according to any one of the preceding clauses, wherein the nutrient composition comprises one or more nutrients selected from the group consisting of:
   a) phosphorus, wherein the phosphorus is present at a concentration of at least 1.5 mg/L;
   b) potassium, wherein the potassium is present at a concentration of at least 7 mg/L; and
   c) nitrogen, wherein the nitrogen is present at a concentration of at least 5.0 mg/L.
39. A nutrient composition for cultivating Sphagnum, the nutrient composition comprising one or more nutrients selected from the group consisting of:
   a) phosphorus, wherein the phosphorus is present at a concentration of at least 1.5 mg/L;
   b) potassium, wherein the potassium is present at a concentration of at least 7 mg/L; and
   c) nitrogen, wherein the nitrogen is present at a concentration of at least 5.0 mg/L.
40. The method or nutrient composition according to any one of the preceding clauses, wherein the nutrient composition comprises a total nitrogen content of 7.17-41.33 mg/L.
41. The method or nutrient composition according to any one of the preceding clauses, wherein the nutrient composition comprises one or more nutrients selected from the group consisting of:
   a) 10.99-54.02 mg/L phosphorus;
   b) 66.84-151.10 mg/L potassium;
   c) 0.33-13.17 mg/L of magnesium;
   d) 1.17-36.96 mg/L calcium;
   e) 0.31-9.15 mg/L iron;
   f) 10.36-182.00 mg/L sulphate;
   g) 82.52-378.62 mg/L nitrate; and
   h) 0.01-26.64 mg/L ammonium.
42. The method or nutrient composition according to any one of the preceding clauses, wherein the nutrient composition comprises one or more nutrients selected from the group consisting of:
   a) 10.99-54.02 mg/L phosphorus;
   b) 66.84-151.10 mg/L potassium;
   c) 0.33-13.17 mg/L of magnesium;
   d) 1.17-36.96 mg/L calcium;
   e) 0.31-9.15 mg/L iron;
   f) 10.36-182.00 mg/L sulphate;
   g) 82.52-378.62 mg/L nitrate; and
   h) 0.01-26.64 mg/L ammonium;
   i) 2.51-53.47 mg/L sodium;
   j) 0.21-1.94 mg/L manganese;
   k) 0.09-0.25 mg/L copper;
   L) 0.37-1.56 mg/L zinc;
   m) 4.30-65.59 mg/L sulphur;
   n) 0.14-1.02 mg/L boron;
   o) 0.01-0.15 mg/L molybdenum;
   p) 0.16-97.64 mg/L chloride; and
   q) 0.01-1.56 mg/L nitrite.
43. The method or nutrient composition according to any one of the preceding clauses, wherein the nutrient composition comprises one or more nutrients selected from the group consisting of:
   a) 4.37-21.46 mg/L phosphorus;
   b) 26.56-60.04 mg/L potassium;
   c) 0.13-5.23 mg/L of magnesium;
   d) 0.46-14.69 mg/L calcium;
   e) 0.12-3.64 mg/L iron;
   f) 4.12-72.32 mg/L sulphate;
   g) 32.79-150.45 mg/L nitrate; and
   h) 0.01-10.58 mg/L ammonium.
44. The method or nutrient composition according to any one of the preceding clauses, wherein the nutrient composition comprises one or more nutrients selected from the group consisting of:
   a) 4.37-21.46 mg/L phosphorus;
   b) 26.56-60.04 mg/L potassium;
   c) 0.13-5.23 mg/L of magnesium;
   d) 0.46-14.69 mg/L calcium;
   e) 0.12-3.64 mg/L iron;
   f) 4.12-72.32 mg/L sulphate;
   g) 32.79-150.45 mg/L nitrate;
   h) 0.01-10.58 mg/L ammonium;
   i) 1.00-21.25 mg/L sodium;
   j) 0.08-0.77 mg/L manganese;
   k) 0.03-0.10 mg/L copper;
   L) 0.15-0.62 mg/L zinc;
   m) 1.71-26.06 mg/L sulphur;
   n) 0.05-0.40 mg/L boron;
   o) 0.01-0.06 mg/L molybdenum;
   p) 0.06-38.80 mg/L chloride; and
   q) 0.01-0.62 mg/L nitrite.
45. The method according to any one of the preceding clauses, wherein the nutrient composition is supplied by irrigation, preferably controllable irrigation.
46. The method according to any one of the preceding clauses, wherein the nutrient composition is supplied to a surface of the Sphagnum and/or to a surface on (e.g. growth medium, such as peat) on which the Sphagnum is present.
47. The method according to any one of the preceding clauses, wherein the nutrient composition is supplied to a growing portion of the Sphagnum, preferably an actively photosynthesising portion of the Sphagnum.
48. The method according to any clause 47, wherein the growing portion of the Sphagnum comprises (or consists of) capitula of the Sphagnum.
49. The method according to any one of the preceding clauses, wherein the nutrient composition is supplied by irrigation and wherein the irrigation ensures that at least a portion of the surface (e.g. a portion of the growing portion) of the Sphagnum remains in contact with air in order to permit gaseous exchange.
50. The method according to any one of clauses 45 to 49, wherein the irrigation is spray irrigation or drip irrigation.
51. The method according to any one of the preceding clauses, wherein the method is carried out for at least 12 hours, 1 day, 1 week or 1 month.
52. The method according to any one of the preceding clauses, further comprising harvesting the Sphagnum.
53. The method according to clause 52, further comprising planting the harvested Sphagnum at a secondary location, preferably at an agricultural site.
54. Sphagnum obtainable by the method according to any one of the preceding clauses.
55. A nutrient composition for cultivating Sphagnum, the nutrient composition comprising nitrogen, phosphorous, and/or potassium.
56. The nutrient composition according to clause 55, wherein the nutrient composition comprises:
   a) at least 175 mg of nitrogen per L;
   b) at least 60 mg of phosphorous per L; and/or
   c) at least 210 mg of potassium per L.
57. The nutrient composition according to clause 55 or 56, wherein the nutrient composition further comprises calcium, and wherein the nutrient composition comprises between 1.17 mg and 83 mg of calcium per L.
58. Use of a nutrient composition for cultivating Sphagnum, wherein the nutrient composition comprises nitrogen, phosphorous, and/or potassium.
59. The use according to clause 58, further comprising supplying the nutrient to the Sphagnum.
60. The use according to clause 58 or 59, wherein the nutrient is supplied at an amount comprising:
   a) between 223.61 mg and 1280.25 mg of nitrogen per m 2 per week;
   b) between 131.93 mg and 648.18 mg of phosphorous per m 2 per week; and or
   c) between 751. 802.09 mg and 1813.26 mg of potassium per m 2 per week.
61. The use according to any one of clauses 58 to 60, wherein the nutrient is supplied at an amount comprising:
   a) 18.85-92.60 mg/m 2 /day of phosphorus;
   b) 114.58-259.04 mg/m 2 /day of potassium;
   c) 0.56-22.58 mg/m 2 /day of magnesium;
   d) 2.00-63.36 mg/m 2 /day of calcium;
   e) 0.54-15.69 mg/m 2 /day of iron;
   f) 17.75-31 1.99 mg/m 2 /day of sulphate;
   g) 141.47-649.07 mg/m 2 /day of nitrate; and
   h) 0.01-45.66 mg/m 2 /day of ammonium.
   i) 4.30-91.66 mg/m 2 /day sodium;
   j) 0.36-3.33 mg/m 2 /day manganese;
   k) 0.15-0.42 mg/m 2 /day copper;
   L) 0.64-2.68 mg/m 2 /day zinc;
   m) 7.38-1 12.44 mg/m 2 /day sulphur;
   n) 0.23-1.74 mg/m 2 /day boron;
   o) 0.02-0.26 mg/m 2 /day molybdenum;
   p) 0.27-167.38 mg/m 2 /day chloride; and/or
   q) 0.01-2.67 mg/m 2 /day nitrite.
62. Use of a nutrient composition according to any one of clauses 39 to 44 or 55 to 57 for cultivating Sphagnum.

## Claims

1. A method for cultivating *Sphagnum,* the method comprising supplying the *Sphagnum* with a nutrient composition;
wherein the nutrient composition comprises nitrogen, phosphorus, and/or potassium;
wherein the nutrient composition is supplied at an amount comprising at least 223.61 mg of nitrogen per m² per week, at least 131.93 mg of phosphorus per m² per week, and/or at least 802.09 mg of potassium per m² per week;
wherein the amount is an average amount of the nutrient composition supplied per week over a period.

2. The method according to claim 1, wherein the nutrient composition is supplied at an amount comprising between 223.61 mg and 1280.25 mg of nitrogen per m² per week.

3. The method according to claim 1 or 2, wherein the nutrient composition is supplied at an amount comprising at least 400 mg of nitrogen per m² per week, preferably at least 800 mg of nitrogen per m² per week.

4. The method according to any one of the preceding claims, wherein the nutrient composition is supplied at an amount comprising between 131.93 mg and 648.18 mg of phosphorus per m² per week.

5. The method according to any one of the preceding claims, wherein the nutrient composition is supplied at an amount comprising at least 150 mg of phosphorus per m² per week, preferably at least 225 mg of phosphorus per m² per week.

6. The method according to any one of the preceding claims, wherein the nutrient composition is supplied at an amount comprising between 802.09 mg and 1813.26 mg of potassium per m² per week.

7. The method according to any one of the preceding claims, wherein the nutrient composition is supplied at an amount comprising at least 1000 mg of potassium per m² per week, preferably at least 1100 mg of potassium per m² per week.

8. The method according to any one of the preceding claims, wherein the nutrient composition comprises nitrogen, phosphorus, and potassium, optionally wherein the nutrient composition is supplied at an amount comprising at least 223.61 mg of nitrogen per m² per week, at least 131.93 mg of phosphorus per m² per week, and at least 802.09 mg of potassium per m² per week.

9. The method according to any one of the preceding claims, wherein the nutrient composition further comprises calcium, magnesium, sodium, copper, zinc, sulfur, boron, iron, molybdenum, and/or chloride.

10. The method according to any one of the preceding claims, wherein the *Sphagnum* has been applied to a surface of a field.

11. The method according to any of claims 1 to 9, wherein the *Sphagnum* is present on a growth medium in a greenhouse.

12. The method according to any one of the preceding claims, wherein the nutrient composition is supplied by irrigation, preferably using spray irrigation and/or drip irrigation.

13. The method according to any one of the preceding claims, further comprising harvesting the *Sphagnum,* optionally further comprising providing a growing medium from the harvested *Sphagnum.*

14. The method according to any one of the preceding claims, wherein the nutrient composition is supplied at least once every three weeks, preferably at least once every two weeks, more preferably at least once per week, even more preferably at least twice per week, still more preferably at least three times per week.

15. The method according to any one of the preceding claims, wherein the period is up to 1 month, preferably up to 3 months, more preferably up to 6 months.
